# EUROPEAN PATENT APPLICATION

(11) **EP 4 723 347 A1**
(43) Date of publication of application: **08.04.2026**
(21) Application number: 23962908.2
(22) Date of filing: 29.12.2023
(51) Int. Cl.: H01M 50/342, H01M 50/249

(54) **BATTERY CELL, BATTERY, AND ELECTRIC DEVICE**

(71) Applicant: Contemporary Amperex Technology Co., Limited, Ningde, Fujian 352100 (CN)
(72) Inventor: WU, Kai, Ningde, Fujian 352100 (CN); SU, Fengsheng, Ningde, Fujian 352100 (CN); GU, Mingguang, Ningde, Fujian 352100 (CN); LI, Yao, Ningde, Fujian 352100 (CN); LI, Wei, Ningde, Fujian 352100 (CN); CHEN, Weike, Ningde, Fujian 352100 (CN); HUANG, Xiuxue, Ningde, Fujian 352100 (CN); GAN, Jiuqiang, Ningde, Fujian 352100 (CN); LI, Quankun, Ningde, Fujian 352100 (CN)
(74) Representative: Gong, Jinping
(86) International application number: PCT/CN2023/143589
(87) International publication number: WO 2025/138234

(57) **Abstract**

The present application provides a battery cell, a battery, and an electrical device. The battery cell includes a shell and a pressure relief component. The shell has a wall portion, and the pressure relief component is arranged on the wall portion. The pressure relief component includes a first weak portion and a second weak portion, the first weak portion defines a predetermined pressure relief region, the pressure relief component is configured to be capable of cracking along at least a part of the first weak portion during pressure relief of the battery cell, and the second weak portion is configured to guide at least a part of the predetermined pressure relief region to flip over to open the at least a part of the predetermined pressure relief region. The first weak portion includes a first weak section, and the first weak section and the second weak portion are arranged at an interval in a first direction. In the first direction, a minimum distance between the first weak section and the second weak portion is L, and a cross-sectional area of the second weak portion perpendicular to its extension direction is S, meeting: 3.3 mm≤L≤48 mm, and 0.008 mm²≤S≤0.45 mm². In this way, the battery cell is capable of achieving rapid pressure relief, and has a high reliability.

## Description

### TECHNICAL FIELD

The present application relates to the field of batteries, and in particular, to a battery cell, a battery, and an electrical device.

### BACKGROUND

Batteries are very widely used in the field of new energy, such as electric vehicles or new-energy vehicles. The new-energy vehicles and electric vehicles have become a new development trend in the automobile industry. The development of the battery technologies needs to take many design factors into consideration at the same time, for example, performance parameters such as cycle life, energy density, discharge capacity, and charge-discharge rate. In addition, the reliability of the battery also needs to be taken into consideration. However, current batteries have poor reliability.

### SUMMARY

An objective of embodiments of the present application is to provide a battery cell, a battery, and an electrical device, which are intended to alleviate the problem of poor reliability of batteries in the related art.

In a first aspect, an embodiment of the present application provides a battery cell. The battery cell includes a shell and a pressure relief component. The shell has a wall portion; and the pressure relief component is arranged on the wall portion, where the pressure relief component includes a first weak portion and a second weak portion, the first weak portion defines a predetermined pressure relief region, the pressure relief component is configured to be capable of cracking along at least a part of the first weak portion during pressure relief of the battery cell, and the second weak portion is configured to guide at least a part of the predetermined pressure relief region to flip over to open at least a part of the predetermined pressure relief region; the first weak portion includes a first weak section, the first weak section and the second weak portion are arranged at an interval in a first direction, and in the first direction, a minimum distance between the first weak section and the second weak portion is L, and a cross-sectional area of the second weak portion perpendicular to its extension direction is S, meeting: 3.3 mm≤L≤48 mm, and 0.008 mm²≤S≤0.45 mm².

In the above technical solution, the pressure relief component is provided with the first weak portion, so that the pressure relief component is capable of cracking along at least a part of the first weak portion during the pressure relief of the battery cell, so as to achieve relief of an internal pressure of the battery cell. The pressure relief component is further provided with the second weak portion. The first weak portion defines the predetermined pressure relief region. The second weak portion is capable of guiding at least a part of the predetermined pressure relief region to flip over, so as to open at least a part of the predetermined pressure relief region for pressure relief. The second weak portion plays an auxiliary role in the predetermined pressure relief region, so that it is easier for the predetermined pressure relief region to flip over, which is conducive to increasing an opening area of the predetermined pressure relief region. Since the predetermined pressure relief region needs to be flipped open under the guidance of the second weak portion, the minimum distance between the first weak section and the second weak portion can be regarded as a power arm for the predetermined pressure relief region to flip open. The larger the minimum distance between the first weak section and the second weak portion is, the larger the power arm for the predetermined pressure relief region to flip open is, and the smaller a force required to push the predetermined pressure relief region to flip open can be. That is, the larger L is, the easier it is for the predetermined pressure relief region to flip open, and the smaller L is, the more difficult it is for the predetermined pressure relief region to flip open. In addition, it should be noted that the magnitude of L may affect the speed at which the predetermined pressure relief region flips open during the pressure relief of the battery cell. The larger L is, the faster the speed at which the predetermined pressure relief region flips open during the pressure relief of the battery cell. The smaller L is, the slower the speed at which the predetermined pressure relief region flips open during the pressure relief of the battery cell. When L≥3.3 mm, the power arm for flipping open the predetermined pressure relief region is large, which facilitates the rapid flipping open of the predetermined pressure relief region, and is conducive to improving the timeliness of the pressure relief of the battery cell. When L≤48 mm, the power arm for flipping open the predetermined pressure relief region will not be too large, so that the first weak section does not easily crack due to a change in an air pressure inside the battery cell, which is conducive to improving the reliability of the battery cell. Therefore, when 3.3 mm≤L≤48 mm, the first weak section does not easily crack due to the change in the air pressure inside the battery cell, and it is also convenient for the predetermined pressure relief region to be quickly flipped open, which is conducive to improving the timeliness of the pressure relief of the battery cell. When S≥0.008 mm², a risk of the second weak portion cracking due to the change in the gas pressure inside the battery cell can be further reduced, which is conducive to improving the reliability of the battery cell. When S≤0.45 mm², a resistance to flipping over of the predetermined pressure relief region is smaller, which facilitates the rapid flipping open of the predetermined pressure relief region, and is conducive to improving the timeliness of the pressure relief of the battery cell. Therefore, when 0.008 mm²≤S≤0.45 mm², the second weak portion does not easily crack due to the change in the air pressure inside the battery cell, and it is also convenient for the predetermined pressure relief region to be quickly flipped open, which is conducive to improving the timeliness of the pressure relief of the battery cell.

As an optional technical solution of an embodiment of the present application, in the first direction, the dimension of the shell is C; when 20 mm≤C≤40 mm, 3.3 mm≤L≤18 mm is met; when 40 mm<C≤60 mm, 6.6 mm<L≤28 mm is met; and when 60 mm<C≤100 mm, 10 mm<L≤48 mm is met.

In the above technical solution, for a battery cell with a size of 20 mm≤C≤40 mm, when 3.3 mm≤L≤18 mm, the minimum distance between the first weak section and the second weak portion in the first direction is moderate, which is conducive to further reducing the risk of the predetermined pressure relief region being affected by the change of the internal pressure of the battery cell and causing the pressure relief component to prematurely crack along the first weak portion, and helps the pressure relief component crack along the first weak portion more promptly when thermal runaway occurs in the battery cell, thereby improving the timeliness of the pressure relief of the battery cell and thus improving the reliability of the battery cell. For a battery cell with a size of 40 mm≤C≤60 mm, when 6.6 mm≤L≤28 mm, it is conducive to further reducing the risk of the predetermined pressure relief region being affected by the change of the internal pressure of the battery cell and causing the pressure relief component to prematurely crack along the first weak portion, and helps the pressure relief component crack along the first weak portion more promptly when thermal runaway occurs in the battery cell, thereby improving the timeliness of the pressure relief of the battery cell and thus improving the reliability of the battery cell. For a battery cell with a size of 60 mm≤C≤100 mm, when 10 mm≤L≤48 mm, it is conducive to further reducing the risk of the predetermined pressure relief region being affected by the change of the internal pressure of the battery cell and causing the pressure relief component to prematurely crack along the first weak portion, and helps the pressure relief component crack along the first weak portion more promptly when thermal runaway occurs in the battery cell, thereby improving the timeliness of the pressure relief of the battery cell and thus improving the reliability of the battery cell.

0.03 mm²≤S≤0.15 mm².

In the above technical solution, when S≥0.03 mm², a risk of the second weak portion cracking due to the change in the gas pressure inside the battery cell can be further reduced, which is conducive to improving the reliability of the battery cell. When S≤0.15 mm², a resistance to flipping over of the predetermined pressure relief region is smaller, which facilitates the rapid flipping open of the predetermined pressure relief region, and is conducive to improving the timeliness of the pressure relief of the battery cell. Therefore, when 0.03 mm²≤S≤0.15 mm², the second weak portion does not easily crack due to the change in the air pressure inside the battery cell, and it is also convenient for the predetermined pressure relief region to be quickly flipped open, which is conducive to improving the timeliness of the pressure relief of the battery cell.

As an optional technical solution of the embodiment of the present application, the pressure relief component is provided with a first groove, and the pressure relief component forms the first weak portion in a region where the first groove is arranged.

In the above technical solution, by forming the first weak portion by opening the first groove in the pressure relief component, the operation is simple and convenient, and is low in cost.

As an optional technical solution of an embodiment of the present application, the pressure relief component is provided with a second groove, and the pressure relief component forms the second weak portion in a region where the second groove is arranged, a minimum width of a groove bottom surface of the second groove is D, and a minimum thickness of the second weak portion is H, meeting: S=D×H.

In the above technical solution, by forming the second weak portion by opening the second groove in the pressure relief component, the operation is simple and convenient, and is low in cost. By measuring the width of the groove bottom surface of the second groove and the minimum thickness of the second weak portion, the cross-sectional area of the second weak portion perpendicular to its extension direction can be indirectly obtained according to S=D×H.

As an optional technical solution of the embodiment of the present application, optionally, 0.04 mm≤D≤0.3 mm, and optionally, 0.06 mm≤D≤0.15 mm.

In the above technical solution, when D≥0.04 mm, a risk of the second weak portion cracking due to the change in the gas pressure inside the battery cell can be further reduced, which is conducive to improving the reliability of the battery cell. When D≤0.3 mm, a resistance to flipping over of the predetermined pressure relief region is smaller, which facilitates the rapid flipping open of the predetermined pressure relief region, and is conducive to improving the timeliness of the pressure relief of the battery cell. Therefore, when 0.04 mm≤D≤0.3 mm, the second weak portion does not easily crack due to the change in the air pressure inside the battery cell, and it is also convenient for the predetermined pressure relief region to be quickly flipped open, which is conducive to improving the timeliness of the pressure relief of the battery cell.

When D≥0.06 mm, a risk of the second weak portion cracking due to the change in the gas pressure inside the battery cell can be further reduced, which is conducive to improving the reliability of the battery cell. When D≤0.15 mm, a resistance to flipping over of the predetermined pressure relief region is smaller, which is conducive to improving the timeliness of the pressure relief of the battery cell. Therefore, when 0.06 mm≤D≤0.15 mm, the second weak portion does not easily crack due to the change in the air pressure inside the battery cell, and it is also convenient for the predetermined pressure relief region to be quickly flipped open, which is conducive to improving the timeliness of the pressure relief of the battery cell.

As an optional technical solution of the embodiment of the present application, optionally, 0.2 mm≤H≤1.5 mm, and optionally, 0.5 mm≤H≤1 mm.

In the above technical solution, when H≥0.2 mm, a risk of the second weak portion cracking due to the change in the gas pressure inside the battery cell can be further reduced, which is conducive to improving the reliability of the battery cell. When H≤1.5 mm, a resistance to flipping over of the predetermined pressure relief region is smaller, which facilitates the rapid flipping open of the predetermined pressure relief region, and is conducive to improving the timeliness of the pressure relief of the battery cell. Therefore, when 0.2 mm≤H≤1.5 mm, the second weak portion does not easily crack due to the change in the air pressure inside the battery cell, and it is also convenient for the predetermined pressure relief region to be quickly flipped open, which is conducive to improving the timeliness of the pressure relief of the battery cell.

When H≥0.5 mm, a risk of the second weak portion cracking due to the change in the gas pressure inside the battery cell can be further reduced, which is conducive to improving the reliability of the battery cell. When D≤1 mm, a resistance to flipping over of the predetermined pressure relief region is smaller, which facilitates the rapid flipping open of the predetermined pressure relief region, and is conducive to improving the timeliness of the pressure relief of the battery cell. Therefore, when 0.5 mm≤H≤1 mm, the second weak portion does not easily crack due to the change in the air pressure inside the battery cell, and it is also convenient for the predetermined pressure relief region to be quickly flipped open, which is conducive to improving the timeliness of the pressure relief of the battery cell.

As an optional technical solution of the embodiment of the present application, the second groove is arranged on a surface of the pressure relief component facing an interior of the shell.

In the above technical solution, the second groove is arranged on the surface of the pressure relief component facing the interior of the shell, and a tension that the predetermined pressure relief region needs to overcome when flipping is small, thereby facilitating the predetermined pressure relief region to flip open quickly, which is conducive to improving the reliability of the battery cell.

As an optional technical solution of the embodiment of the present application, the pressure relief component has a first surface and a second surface arranged opposite to each other in a thickness direction of the wall portion. The first surface is provided with the first groove, and the pressure relief component forms the first weak portion in the region where the first groove is arranged. The second surface is provided with the second groove, and the pressure relief component forms the second weak portion in the region where the second groove is arranged.

In the above technical solution, the first weak portion and the second weak portion are formed by opening the first groove and the second groove in the pressure relief component, the operation is simple and convenient, and is low in cost. By arranging the first groove and the second groove on the first surface and the second surface of the pressure relief component respectively, so that the first groove and the second groove are respectively located on both sides of the pressure relief component, it is convenient to process the first groove and the second groove on both sides of the pressure relief component respectively, which is conducive to reducing the mutual influence of the first groove and the second groove during the processing.

As an optional technical solution of an embodiment of the present application, the first surface is a surface of the pressure relief component facing away from the interior of the shell, and the second surface is a surface of the pressure relief component facing the interior of the shell.

In the above technical solution, by arranging the first groove on the surface of the pressure relief component away from the interior of the shell, the tension that the first weak portion needs to overcome when cracking is small, and it is easy to crack. By arranging the second groove on the surface of the pressure relief component facing the interior of the shell, the tension that the predetermined pressure relief region needs to overcome when flipping is small, thereby facilitating the predetermined pressure relief region to flip open quickly, which is conducive to improving the reliability of the battery cell.

As an optional technical solution of the embodiment of the present application, the pressure relief component is provided with the first groove, and the pressure relief component forms the first weak portion in the region where the first groove is arranged. The first groove includes a first groove section, a second groove section, and a third groove section, the first groove section and the third groove section are arranged opposite to each other, the second groove section connects the first groove section and the third groove section, in the first direction, the second groove section and the second weak portion are arranged at an interval, and the pressure relief component forms the first weak section in the region where the second groove section is arranged.

In the above technical solution, the first groove includes the first groove section, the second groove section, and the third groove section, and the second groove section connects the first groove section and the third groove section, so that the pressure relief component is capable of cracking along the first groove section, the second groove section, and the third groove section during the pressure relief of the battery cell, so as to open the predetermined pressure relief region to relieve the internal pressure of the battery cell. The first groove with such a structure makes a connection position between the first groove section and the second groove section and a connection position between the first groove section and the third groove section weaker, and is easier to crack and open the predetermined pressure relief region for pressure relief. Moreover, a pressure relief area and a pressure relief rate of the battery cell are capable of being further improved.

As an optional technical solution of the embodiment of the present application, the first weak portion defines two predetermined pressure relief regions, the two predetermined pressure relief regions are respectively located on both sides of the second groove section, and at least one second weak portion is correspondingly arranged in each of the predetermined pressure relief regions.

In the above technical solution, the first weak portion defines two predetermined pressure relief regions, each of the predetermined pressure relief regions is correspondingly provided with at least one second weak portion. During the pressure relief of the battery cell, the two predetermined pressure relief regions are flipped open under the guidance of the corresponding second weak portions, so that the battery cell has a larger pressure relief area, which is conducive to improving the pressure relief rate of the battery cell and improving the reliability of the battery cell.

As an optional technical solution of the embodiment of the present application, one second weak portion is correspondingly arranged in each of the predetermined pressure relief regions, the pressure relief component is provided with the second groove, the pressure relief component forms the second weak portion in the region where the second groove is arranged, and the first groove is located between the two second grooves.

In the above technical solution, the predetermined pressure relief regions are one-to-one corresponding to the second weak portions, which can reduce the number of second weak portions, reduce the number of processing times for the pressure relief component, and reduce a stress of the pressure relief component. The first groove is arranged between the two second grooves. During the pressure relief of the battery cell, the pressure relief component is capable of cracking along the first groove section, the second groove section, and the third groove section, thereby opening the two predetermined pressure relief regions, so that the two predetermined pressure relief regions are flipped open under the guidance of their corresponding second weak portions. Therefore, the battery cell has a larger pressure relief area, which is conducive to improving the pressure relief rate of the battery cell and improving the reliability of the battery cell.

As an optional technical solution for the embodiment of the present application, the position where the second groove section is connected to the first groove section deviates from both ends of the first groove section, and the position where the second groove section is connected to the third groove section deviates from both ends of the third groove section.

In the above technical solution, by setting the connection position between the second groove section and the first groove section to be located between the two ends of the second groove section, and setting the connection position between the second groove section and the third groove section to be located between the two ends of the third groove section, so that the first groove section, the second groove section, and the third groove section form a structure similar to an "H" shape, both sides of the second groove section of the first groove are each capable of forming a predetermined pressure relief region. Moreover, the two predetermined pressure relief regions are capable of being opened in a split manner for pressure relief during the pressure relief of the battery cell, which is conducive to further increasing the pressure relief effect of the battery cell and can effectively improve the pressure relief rate of the battery cell.

As an optional technical solution of the embodiment of the present application, the pressure relief component is provided with the second groove, the pressure relief component forms the second weak portion in the region where the second groove is arranged, and the first groove section, the second groove section, and the third groove section are not in contact with the second groove.

In the above technical solution, by arranging each of the first groove section, the second groove section, and the third groove section at an interval from the second groove, on the one hand, a mutual influence between the first groove and the second groove during the processing is capable of being reduced, and on the other hand, the phenomenon that the pressure relief component cracks along the second groove when the pressure relief component cracks along the first groove for pressure relief is capable of being reduced, and a stress influence between the region of the pressure relief component where the first groove is arranged and the region of the pressure relief component where the second groove is arranged is capable of being reduced.

As an optional technical solution of the embodiment of the present application, the second groove section and the second groove are arranged opposite to each other in a first direction, and in the first direction, the first groove section and the third groove section are each arranged at an interval from the second groove.

In the above technical solution, by making the second groove section and the second groove be arranged opposite to each other in the first direction, the first groove section and the third groove section are each arranged at an interval from the second groove in the first direction, so that the predetermined pressure relief region defined by the first groove section, the second groove section, and the third groove section, when opened, can be flipped around the region of the pressure relief component where the second groove is arranged. Moreover, a flipping angle of the predetermined pressure relief region after being opened is capable of being increased, so as to increase the pressure relief area of the battery cell.

As an optional technical solution of the embodiment of the present application, the wall portion is of a rectangular structure, and the first direction is parallel to a width direction of the wall portion.

In the above technical solution, the second groove section and the second groove are arranged in the width direction of the wall portion, and in the width direction of the wall portion, the first groove section and the third groove section are each arranged at an interval from the second groove. The space in the width direction of the wall portion is large, which is convenient for processing the first groove and the second groove. Moreover, during production, fracture initiation pressures of a plurality of battery cells processed are relatively consistent.

As an optional technical solution of the embodiment of the present application, the pressure relief component has a first surface and a second surface arranged opposite to each other in the thickness direction of the wall portion, the pressure relief component is provided with a first groove, and the first groove includes a plurality of steps of grooves arranged in sequence from the first surface to the second surface. In two adjacent steps of grooves, the step of groove far from the first surface is arranged on a groove bottom surface of the step of groove close to the first surface; where a groove bottom wall of the step of groove farthest from the first surface among the plurality of steps of grooves is the first weak portion.

In the above technical solution, the plurality of steps of grooves are sequentially arranged on the pressure relief component in the direction from the first surface to the second surface. During molding, the plurality of steps of grooves can be formed step by step, thereby reducing a molding force on the pressure relief component and reducing a risk of cracks in the pressure relief component. The pressure relief component is not prone to failure due to cracks at the positions where the grooves are set, thereby improving the reliability of the battery cell. The plurality of steps of grooves may be molded by stamping, cold heading, or the like, so that the groove wall of the groove will undergo cold work hardening (the grain arrangement changes, thus resulting in lattice distortion, reducing the metal plasticity, and increasing the material hardness), so that the groove has an enhanced ability to resist an external impact, and is less likely to be damaged by the external impact. This helps reduce the risk of leakage from the pressure relief component.

As an optional technical solution of the embodiment of the present application, the pressure relief component is integrally formed with the wall portion.

In the above technical solution, the pressure relief component is integrally formed with the wall portion without the need for an additional welding or bonding step, which helps reduce the risk of leakage from the pressure relief component. Moreover, during production, it is easy to keep fracture initiation pressures of a plurality of battery cells processed relatively consistent.

As an optional technical solution of the embodiment of the present application, the pressure relief component and the wall portion are arranged separately, the wall portion is provided with a pressure relief hole, and the pressure relief component is mounted on the wall portion and covers the pressure relief hole.

In the above technical solution, the pressure relief component is arranged separately from the wall portion and is mounted on the wall portion, so as to facilitate processing and manufacturing.

As an optional technical solution of the embodiment of the present application, the battery cell includes an electrode assembly, the electrode assembly is accommodated in the shell, and the wall portion supports the electrode assembly in the direction of gravity.

In the above technical solution, the wall portion supports the electrode assembly in the direction of gravity, and the pressure relief component is arranged on the wall portion. In this way, during the pressure relief of the battery cell, an ejected fluid medium is not easy to act on other electrical connection components, thereby reducing the risk of short circuit during the pressure relief of the battery cell.

As an optional technical solution of the embodiment of the present application, the battery cell includes an electrode terminal, and the electrode terminal is arranged on another wall of the shell except the wall portion.

In the above technical solution, the electrode terminal and the pressure relief component are respectively arranged on different walls of the shell. During the pressure relief of the battery cell, the ejected fluid medium is not easy to act on the electrode terminal and cause the electrode terminal to short-circuit, thereby reducing the risk of short circuit during the pressure relief of the battery cell.

As an optional technical solution of the embodiment of the present application, the electrode terminal is arranged on a wall of the shell opposite to the wall portion.

In the above technical solution, the electrode terminal is arranged on the wall of the shell opposite to the wall portion, and the electrode terminal is far away from the pressure relief component; therefore, during the pressure relief of the battery cell, the ejected fluid medium is even not easy to act on the electrode terminal to cause short-circuit of the electrode terminal, thereby reducing the risk of short circuit during the pressure relief of the battery cell.

As an optional technical solution of the embodiment of the present application, the shell includes a case and an end cover. The case has an opening; and the end cover is connected to the case and closes the opening; where the end cover is the wall portion, or the case includes the wall portion.

In the above technical solution, when the end cover is the wall portion, the pressure relief component is arranged on the end cover, which is simple and convenient to manufacture. When the case includes the wall portion, the pressure relief component is arranged on a wall of the case, and the fluid medium sprayed from the pressure relief component is not easy to act on another electrical connection structure on the end cover, which is conducive to reducing the risk of short circuit of the battery cell.

In a second aspect, an embodiment of the present application further provides a battery, the battery including the above battery cell.

In a third aspect, an embodiment of the present application further provides an electrical device, the electrical device including the above battery cell.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle according to some embodiments of the present application;
FIG. 2 is an exploded structural view of a battery according to some embodiments of the present application;
FIG. 3 is a schematic structural view of a battery cell according to some embodiments of the present application;
FIG. 4 is an exploded structural view of a battery cell according to some embodiments of the present application;
FIG. 5 is a bottom view of a shell of a battery cell according to some embodiments of the present application;
FIG. 6 is a partial sectional view of a shell of a battery cell according to some embodiments of the present application;
FIG. 7 is a partial enlarged view of a part A in the shell shown in FIG. 6;
FIG. 8 is a bottom view of a shell of a battery cell according to other embodiments of the present application; and
FIG. 9 is a bottom view of a shell of a battery cell according to still other embodiments of the present application.

Reference numerals: 1000-Vehicle; 100-Battery; 10-Box; 11-First box body; 12-Second box body; 20-Battery cell; 21-Shell; 211-Wall portion; 2111-First surface; 2112-Second surface; 212-First wall; 2121-First outer surface; 213-Second wall; 2131-Second outer surface; 214-Pressure relief component; 2141-First-step groove; 2142-Second-step groove; 2143-Third-step groove; 21431-Predetermined pressure relief region; 2143a -First groove section; 2143b-Second groove section; 2143c-Third groove section; 2144-First weak portion; 21441-First weak section; 2145-Second weak portion; 21451-Second groove; 2146-First groove; 215-Case; 2151-Opening; 216-End cover; 22-Electrode assembly; 221-Tab; 23-Electrode terminal; 24-Current collecting component; 200-Controller; 300-Motor.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, baked carbon, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds.

In some embodiments, the positive electrode may adopt a foam metal. The foam metal may be foam nickel, foam copper, foam aluminum, a foam alloy, or the like. When the foam metal is used as the positive electrode, a surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may adopt a metal foil, a foam metal, or a composite current collector. For example, as the metal foil, silver-coated aluminum or stainless steel, stainless steel, copper, aluminum, nickel, baked carbon, carbon, nickel, titanium, or the like can be used. The foam metal may be foam nickel, foam copper, foam aluminum, a foam alloy, or the like. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some embodiments, the spacer is a separator. There may be various types of separators, and any well-known separator with a porous structure having good chemical stability and mechanical stability may be selected.

For example, the material of the separator may include at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode, and plays roles in transmitting ions and isolating the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a wound structure. The positive electrode plate and the negative electrode plate are wound into the wound structure.

In some implementations, the electrode assembly is of a laminated structure.

As an example, there may be a plurality of positive electrode plates and a plurality of negative electrode plates, and the plurality of positive electrode plates and the plurality of negative electrode plates are alternately stacked.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tabs include a positive tab and a negative tab.

In some embodiments, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square-shell battery cell, a blade-shaped battery cell, and a polygon prism battery. For example, the polygon prism battery may be a hexagonal prism battery.

A battery mentioned in the embodiments of the present application refers a single physical module including one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage cabinet, or the like.

Batteries are very widely used in the field of new energy, such as electric vehicles or new-energy vehicles. The new-energy vehicles and electric vehicles have become a new development trend in the automobile industry. The development of the battery technologies needs to take many design factors into consideration at the same time, for example, performance parameters such as cycle life, energy density, discharge capacity, and charge-discharge rate. In addition, the reliability of the battery also needs to be taken into consideration. However, current batteries have poor reliability.

For a battery cell, in order to improve the reliability of the battery cell, a pressure relief mechanism is welded on the battery cell in the related art. The pressure relief mechanism is provided with a weak portion, and the weak portion defines a pressure relief portion. When an internal pressure of the battery cell reaches a fracture initiation pressure, the weak portion cracks, the pressure relief portion is open, so as to relieve the internal pressure of the battery cell to reduce the risk of explosion or fire of the battery cell.

However, the weak portion often cracks prematurely, that is, before the internal pressure of the battery cell reaches the desired fracture initiation pressure of the project, the weak portion has already cracked, causing the battery cell to be scrapped prematurely. However, during the pressure relief of the battery cell, the opening speed of the pressure relief portion is slow, resulting in a slow pressure relief speed, and the pressure inside the battery cell cannot be quickly relieved, so that the battery cell still has a greater risk of explosion and fire, resulting in poor reliability of the battery cell.

In view of the above, the embodiments of the present application provide a battery cell. The battery cell includes a shell and a pressure relief component. The shell has a wall portion, and the pressure relief component is arranged on the wall portion. The pressure relief component includes a first weak portion and a second weak portion, the first weak portion defines a predetermined pressure relief region, the pressure relief component is configured to be capable of cracking along at least a part of the first weak portion during pressure relief of the battery cell, and the second weak portion is configured to guide at least a part of the predetermined pressure relief region to flip over to open the at least a part of the predetermined pressure relief region. The first weak portion includes a first weak section, and the first weak section and the second weak portion are arranged at an interval in a first direction. In the first direction, a minimum distance between the first weak section and the second weak portion is L, and a cross-sectional area of the second weak portion perpendicular to its extension direction is S, meeting: 3.3 mm≤L≤48 mm, and 0.008 mm²≤S≤0.45 mm².

The pressure relief component is provided with the first weak portion, so that the pressure relief component is capable of cracking along at least a part of the first weak portion during the pressure relief of the battery cell, so as to achieve relief of an internal pressure of the battery cell. The pressure relief component is further provided with the second weak portion. The first weak portion defines the predetermined pressure relief region. The second weak portion is capable of guiding at least a part of the predetermined pressure relief region to flip over, so as to open at least a part of the predetermined pressure relief region for pressure relief. The second weak portion plays an auxiliary role in the predetermined pressure relief region, so that it is easier for the predetermined pressure relief region to flip over, which is conducive to increasing an opening area of the predetermined pressure relief region. Since the predetermined pressure relief region needs to be flipped open under the guidance of the second weak portion, the minimum distance between the first weak section and the second weak portion can be regarded as a power arm for the predetermined pressure relief region to flip open. The larger the minimum distance between the first weak section and the second weak portion is, the larger the power arm for the predetermined pressure relief region to flip open is, and the smaller a force required to push the predetermined pressure relief region to flip open can be. That is, the larger L is, the easier it is for the predetermined pressure relief region to flip open, and the smaller L is, the more difficult it is for the predetermined pressure relief region to flip open. In addition, it should be noted that the magnitude of L may affect the speed at which the predetermined pressure relief region flips open during the pressure relief of the battery cell. The larger L is, the faster the speed at which the predetermined pressure relief region flips open during the pressure relief of the battery cell. The smaller L is, the slower the speed at which the predetermined pressure relief region flips open during the pressure relief of the battery cell. When L≥3.3 mm, the power arm for flipping open the predetermined pressure relief region is large, which facilitates the rapid flipping open of the predetermined pressure relief region, and is conducive to improving the timeliness of the pressure relief of the battery cell. When L≤48 mm, the power arm for flipping open the predetermined pressure relief region will not be too large, so that the first weak section does not easily crack due to a change in an air pressure inside the battery cell, which is conducive to improving the reliability of the battery cell. Therefore, when 3.3 mm≤L≤48 mm, the first weak section does not easily crack due to the change in the air pressure inside the battery cell, and it is also convenient for the predetermined pressure relief region to be quickly flipped open, which is conducive to improving the timeliness of the pressure relief of the battery cell. When S≤0.45 mm², a resistance to flipping over of the predetermined pressure relief region is smaller, which facilitates the rapid flipping open of the predetermined pressure relief region, and is conducive to improving the timeliness of the pressure relief of the battery cell. Therefore, when 0.008 mm²≤S≤0.45 mm², the second weak portion does not easily crack due to the change in the air pressure inside the battery cell, and it is also convenient for the predetermined pressure relief region to be quickly flipped open, which is conducive to improving the timeliness of the pressure relief of the battery cell.

The battery cell disclosed in the embodiments of the present application can be used, but are not limited to, in electrical apparatuses such as vehicles, ships, or aircrafts. A power supply system of the electrical apparatus can be composed of battery cells, batteries, and other components disclosed in the present application, which is conducive to improving the reliability of the battery cells.

An embodiment of the present application provides an electrical apparatus with a battery used as a power source. The electrical apparatus may be, but is not limited to, a mobile phone, a tablet, a laptop, an electric toy, an electric tool, a storage battery car, an electric vehicle, a ship, a spacecraft, or the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

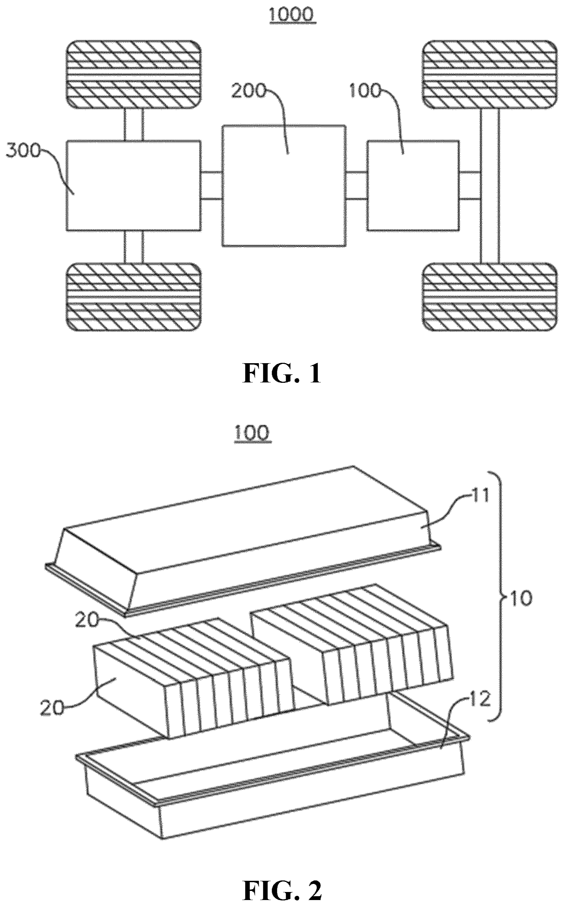

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range vehicle, or the like. A battery 100 is provided in the vehicle 1000. The battery 100 may be arranged at the bottom of the vehicle 1000, or the head of the vehicle 1000, or the tail of the vehicle 1000. The battery 100 may be configured to supply power to the vehicle 1000. For example, the battery 100 may be used as an operating power source or usage power source for the vehicle 1000. The vehicle 1000 may further include a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, the battery 100 can not only be used as the operating power source or usage power source for the vehicle 1000, but also as the driving power source for the vehicle 1000 to replace or partially replace fuel or natural gas to provide driving power for the vehicle 1000.

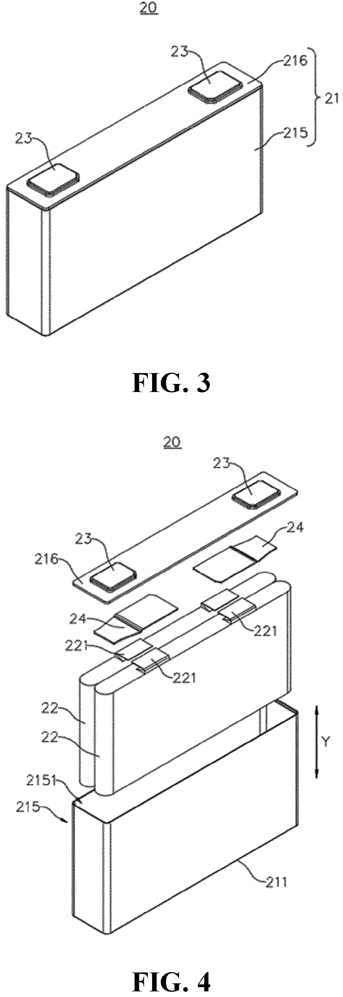

Referring to FIG. 2 and FIG. 3, FIG. 2 is an exploded structural view of a battery 100 according to some embodiments of the present application, and FIG. 3 is a schematic structural view of a battery cell 20 according to some embodiments of the present application. The battery 100 includes a box body 10 and battery cells 20, and the battery cells 20 are accommodated in the box body 10.

Where the box body 10 is configured to provide an assembling space for the battery cells 20, and the box body 10 may be of various structures. In some embodiments, the box 10 includes a first box body 11 and a second box body 12. The first box body 11 and the second box body 12 cover each other, and the first box body 11 and the second box body 12 together define an assembling space for accommodating the battery cell 20. The second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box body 10 formed by the first box body 11 and the second box body 12 may be in various shapes, such as a cylinder, a cuboid, or a cube. Exemplarily, in FIG. 2, the box body 10 is in a cuboid shape.

In the battery 100, one or a plurality of battery cells 20 may be arranged in the box body 10. If a plurality of battery cells 20 are arranged in the box body 10, the plurality of battery cells 20 may be connected in series, parallel or series and parallel, where the series-parallel connection means that some of the plurality of battery cells 20 are connected in series and some are connected in parallel. The plurality of battery cells 20 may be directly connected in series, parallel or series and parallel together, and then, the whole formed by the plurality of battery cells 20 is accommodated in the box body 10. Of course, the battery 100 may also be in the form of a battery module composed of a plurality of battery cells 20 in series, parallel or series and parallel first, and then, a plurality of battery modules are connected in series, parallel or series and parallel to form a whole which is accommodated in the box body 10.

In some embodiments, the battery 100 may further include other structures. For example, the battery 100 may further include a convergence component, and the plurality of battery cells 20 may be connected through the convergence component so as to achieve electrical connection between the plurality of battery cells 20.

Each battery cell 20 may be a secondary battery or a primary battery; and may also be a lithium-sulfur battery, a sodium-ion battery, or a magnesium-ion battery, but is not limited thereto. The battery cell 20 may be in various shapes, such as a cuboid, a cylinder, or a prism. For example, in FIG. 3, the battery cell 20 is in a cuboid shape.

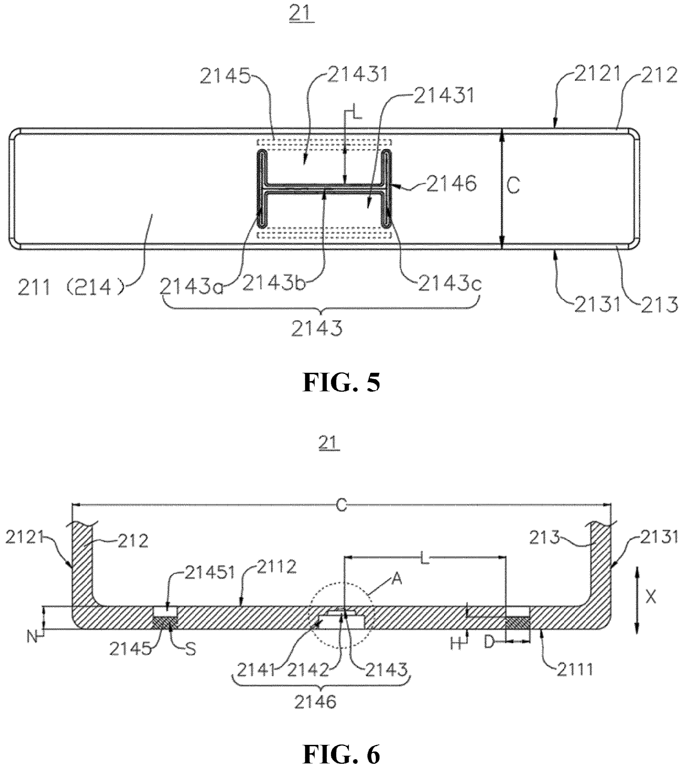

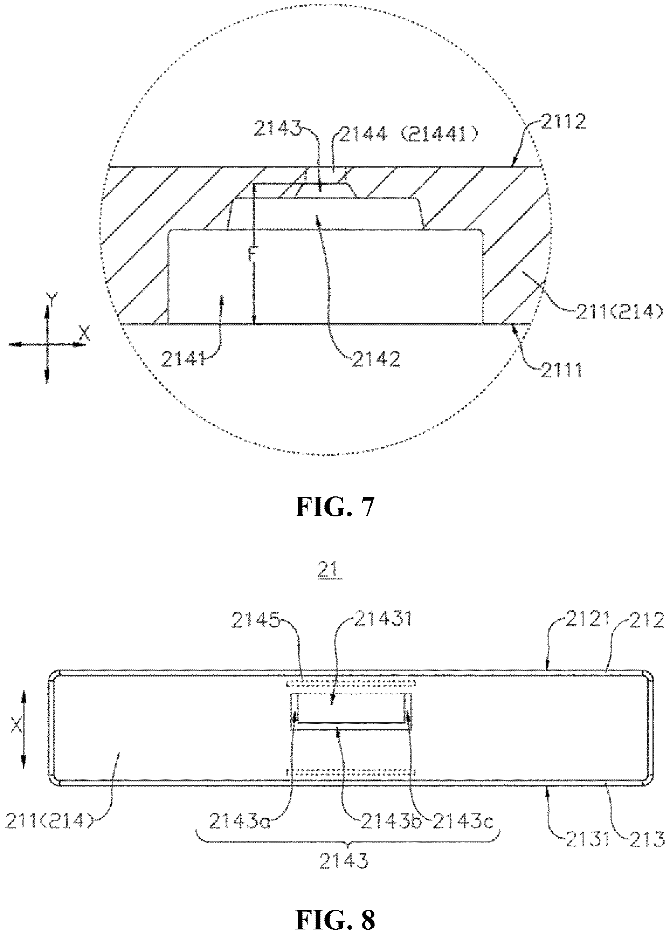

According to some embodiments of the present application, and referring to FIG. 3, FIG. 4, FIG. 5, FIG. 6, and FIG. 7, FIG. 4 is an exploded structural view of a battery cell 20 according to some embodiments of the present application. FIG. 5 is a bottom view of a shell 21 of a battery cell 20 according to some embodiments of the present application. FIG. 6 is a partial sectional view of a shell 21 of a battery cell 20 according to some embodiments of the present application. FIG. 7 is a partial enlarged view of a part A in the shell 21 shown in FIG. 6. The embodiments of the present application provide a battery cell 20. The battery cell 20 includes a shell 21 and a pressure relief component 214. The shell 21 has a wall portion 211, and the pressure relief component 214 is arranged on the wall portion 211. The pressure relief component 214 includes a first weak portion 2144 and a second weak portion 2145, the first weak portion 2144 defines a predetermined pressure relief region 21431, the pressure relief component 214 is configured to be capable of cracking along at least a part of the first weak portion 2144 during pressure relief of the battery cell 20, and the second weak portion 2145 is configured to guide at least a part of the predetermined pressure relief region 21431 to flip over to open at least a part of the predetermined pressure relief region 21431. The first weak portion 2144 includes a first weak section 21441, and the first weak section 21441 and the second weak portion 2145 are arranged at an interval in a first direction. In the first direction, a minimum distance between the first weak section 21441 and the second weak portion 2145 is L, and a cross-sectional area of the second weak portion 2145 perpendicular to its extension direction is S, meeting: 3.3 mm≤L≤48 mm, and 0.008 mm²≤S≤0.45 mm².

The battery cell 20 refers to the smallest unit constituting a battery 100.

The shell 21 includes an end cover 216 and a case 215, the case 215 has an opening 2151, and the end cover 216 is connected to the case 215 and closes the opening 2151.

The end cover 216 refers to a component that covers the opening 2151 of the case 215 to isolate the internal environment of the battery cell 20 from the external environment. Without limitation, the shape of the end cover 216 may be adapted to the shape of the case 215 to fit the case 215. Optionally, the end cover 216 may be made of a material (such as aluminum alloy) with a certain hardness and strength, and in this way, the end cover 216 is not easily deformed when being subjected to extrusion and collisions, such that the battery cell 20 is capable of having a higher structural strength, and the safety performance can also be improved. The end cover 216 may be made of various materials, such as copper, iron, aluminum, stainless steel, aluminum alloy, and plastic, which is not particularly limited in the embodiments of the present application. In some embodiments, the battery cell 20 further includes an insulating member. The insulating member is arranged on an inner side of the end cover 216, and the insulating member may be configured to isolate an electrical connection component in the case 215 from the end cover 216, thereby reducing the risk of short circuit. For example, the insulating member may be made of plastic, rubber, and the like.

The case 215 is an component configured to fit the end cover 216 to form the internal environment of the battery cell 20, where the formed internal environment can be used for accommodating the electrode assembly 22, an electrolyte solution, and other components. The case 215 and the end cover 216 may be separate components, the case 215 may be provided with the opening 2151, and the internal environment of the battery cell 20 is formed by making the end cover 216 cover the opening 2151 at the opening 2151. Without limitation, the end cover 216 and the case 215 may also be integrated. Specifically, the end cover 216 and the case 215 may form a common connecting surface before other components enter the case. When the interior of the case 215 is required to be encapsulated, the case 215 is covered by the end cover 216. The case 215 may be of various shapes and dimensions, such as a cuboid, a cylinder, and a hexagonal prism. Specifically, the shape of the case 215 may be determined according to the specific shape and dimension of the electrode assembly 22. The case 215 may be made of various materials, such as copper, iron, aluminum, stainless steel, aluminum alloy, and plastic, which is not particularly limited in the embodiments of the present application.

The electrode assembly 22 is a component of the battery cell 20 where an electrochemical reaction occurs. One or more electrode assemblies 22 may be included within the shell 21. The electrode assembly 22 is mainly formed by winding or stacking a positive electrode plate and a negative electrode plate, and a separator is generally arranged between the positive electrode plate and the negative electrode plate. The portions, with active materials, of the positive electrode plate and the negative electrode plate constitute a main body part of the electrode assembly 22, and the portions, without the active materials, of the positive electrode plate and the negative electrode plate respectively constitute tabs 221. The positive tab and the negative tab may be located at one end of the main body part together or located at two ends of the main body part respectively. In a charging or discharging process of the battery 100, the positive active material and the negative active material react with the electrolytic solution.

In some embodiments, referring to FIG. 4, the battery cell 20 may further include an electrode terminal 23. The electrode terminal 23 is mounted on the shell 21 in an insulated manner, and the electrode terminal 23 is electrically connected to the electrode assembly 22, to input or output electric energy of the battery cell 20.

It should be noted that the electrode terminal 23 is mounted on the shell 21 in an insulated manner, that is, no electrical connection is formed between the electrode terminal 23 and the shell 21.

In FIG. 3 and FIG. 4, the battery cell 20 includes two electrode terminals 23, and the two electrode terminals 23 are arranged at an interval on the end cover 216. Correspondingly, each electrode assembly 22 has two tabs 221, and the two tabs 221 have opposite polarities. The two electrode terminals 23 are electrically connected to the two tabs 221 of the electrode assembly 22, respectively, to realize the input or output of the positive and negative electrodes of the battery cell 20.

For example, the electrode terminal 23 may be made of a variety of materials. For example, the electrode terminal 23 may be made of copper, iron, aluminum, steel, aluminum alloy, or the like.

The electrode terminal 23 may be mounted on the shell 21 in various structures. For example, in FIG. 3 and FIG. 4, the two electrode terminals 23 are both mounted on the end cover 216 of the shell 21. Of course, the structure of the battery cell 20 is not limited to this. In other embodiments, the two electrode terminals 23 may also be mounted on the case 215 of the shell 21. Similarly, for the two electrode terminals 23, one electrode terminal 23 may be mounted on the case 215 of the shell 21 and the other electrode terminal 23 may be mounted on the end cover 216 of the shell 21.

In some embodiments, referring to FIG. 4, the battery cell 20 may further include two current collecting components 24, both of the two current collecting components 24 are arranged in the shell 21, and each of the current collecting components 24 is used to connect one electrode terminal 23 to tabs 221 with the same polarity in a plurality of electrode assemblies 22 to achieve the electrical connection between the electrode terminal 23 and the electrode assemblies 22, which is conducive to reducing the difficulty of assembling between the tabs 221 and the electrode terminal 23.

For example, the current collecting component 24 may be made of a variety of materials. For example, the current collecting component 24 may be made of copper, iron, aluminum, steel, aluminum alloy, or the like.

The wall portion 211 may be the end cover 216 of the shell 21, and may also be a wall of the case 215 of the shell 21. For example, in FIG. 3 and FIG. 4, the wall portion 211 is a bottom wall of the case 215 arranged opposite to the end cover 216. In another embodiment, the wall portion 211 may also be a side wall of the case 215 that is adjacent to and connected to the end cover 216.

The pressure relief component 214 may be a component mounted on the wall portion 211. In this case, the pressure relief component 214 and the wall portion 211 are separately arranged and connected. For example, the pressure relief component 214 is a rupture disc mounted on the wall portion 211. The pressure relief component 214 may also be a part of the wall portion 211. In this case, the pressure relief component 214 and the wall portion 211 are formed integrally. The wall of the shell 21 that is the wall portion 211 can be determined based on the position where the pressure relief component 214 is arranged. For example, when the pressure relief component 214 is arranged on the end cover 216, the end cover 216 is the wall portion 211. When the pressure relief component 214 is arranged on the bottom wall of the case 215, the bottom wall is the wall portion 211. When the pressure relief component 214 is arranged on the side wall of the case 215, the side wall is the wall portion 211.

The first weak portion 2144 functions for pressure relief, and is configured to enable the pressure relief component 214 to crack along the first weak portion 2144 when the internal pressure or temperature of the battery cell 20 reaches a predetermined value, so as to relieve the pressure inside the battery cell 20. In some embodiments, the strength of the pressure relief component 214 at the position of the first weak portion 2144 can be lower than the strength of the pressure relief component 214 at other positions. In this way, when the internal pressure or temperature of the battery cell 20 reaches the predetermined value, the first weak portion 2144 can crack under the action of the internal pressure, so as to relieve the pressure inside the battery cell 20. In other embodiments, a melting point of the pressure relief component 214 at the first weak portion 2144 may be lower than the melting points at other positions of the pressure relief component 214. In this way, when the internal pressure or temperature of the battery cell 20 reaches the predetermined value, the first weak portion 2144 can crack under the action of the high temperature, so as to relieve the pressure inside the battery cell 20.

The first weak portion 2144 defines a predetermined pressure relief region 21431. During the pressure relief of the battery cell 20, the first weak portion 2144 cracks along an edge of the predetermined pressure relief region 21431, so that the predetermined pressure relief region 21431 is capable of opening for pressure relief.

The second weak portion 2145 plays a role of guiding at least a part of the predetermined pressure relief region 21431 to flip open. Optionally, the second weak portion 2145 has a higher strength than the first weak portion 2144. During the pressure relief of the battery cell 20, the first weak portion 2144 cracks first to allow a fluid medium in the battery cell 20 to flow out for pressure relief. Afterwards, the predetermined pressure relief region 21431 can be flipped outward with the second weak portion 2145 as a rotation axis under the action of the fluid medium, so as to open a larger opening 2151 to achieve rapid pressure relief.

The first weak portion 2144 includes a first weak section 21441. The first weak section 21441 may extend in a linear trajectory or an arc trajectory. In the first direction, the first weak section 21441 and the second weak portion 2145 are arranged at an interval. Referring to FIG. 5, FIG. 6, and FIG. 7, the first direction may be a direction X shown in the figure. Optionally, the first weak section 21441 and the second weak portion 2145 are arranged opposite to each other in the first direction. To facilitate illustrating the position of the first weak section 21441, an edge of the first weak section 21441 is marked with a dotted line in FIG. 7.

L represents a minimum distance between the first weak section 21441 and the second weak portion 2145 in the first direction, in millimeters. During measurement, a distance between a position of the first weak section 21441 closest to the second weak portion 2145 in the first direction and a position of the second weak portion 2145 closest to the first weak section 21441 in the first direction may be measured, and a method of taking an average value through multiple measurements may also be adopted to reduce measurement errors. The minimum distance between the first weak section 21441 and the second weak portion 2145 can be regarded as a power arm for the predetermined pressure relief region 21431 to flip open. The larger the minimum distance between the first weak section 21441 and the second weak portion 2145 is, the larger the power arm for the predetermined pressure relief region 21431 to flip open is, and the smaller a force required to push the predetermined pressure relief region 21431 to flip open can be. That is, the larger L is, the easier it is for the predetermined pressure relief region 21431 to flip open, and the smaller L is, the more difficult it is for the predetermined pressure relief region 21431 to flip open.

The minimum distance between the first weak section 21441 and the second weak portion 2145 in the first direction may be: L=3.3 mm, 5 mm, 10 mm, 15 mm, 20 mm, 25 mm, 30 mm, 35 mm, 40 mm, 45 mm, 48 mm, or the like.

S represents a cross-sectional area of a cross section perpendicular to the extension direction of the second weak portion 2145, in square millimeters. The cross-sectional area of the second weak portion 2145 perpendicular to its extension direction is related to a resistance that hinders the predetermined pressure relief region 21431 from flipping open. The larger the cross-sectional area of the second weak portion 2145 perpendicular to its extension direction, the greater a force required to push the predetermined pressure relief region 21431 to flip open. That is, the larger S is, the more difficult it is for the predetermined pressure relief region 21431 to flip open, and the smaller S is, the easier it is for the predetermined pressure relief region 21431 to flip open.

Referring to FIG. 6, FIG. 6 shows a cross section perpendicular to the extension direction of the second weak portion 2145 with a mesh-shaped filling pattern. An area filled by the mesh-shaped filling pattern is the cross-sectional area of the cross section perpendicular to the extension direction of the second weak portion 2145, that is, S.

In some embodiments, the position of the second weak portion 2145 can be determined by tomography, and the cross-sectional area of the cross section perpendicular to the extension direction of the second weak portion 2145 can be determined, that is, S can be obtained by tomography.

Optionally, the pressure relief component 214 is provided with a second groove 21451, and the pressure relief component 214 forms the second weak portion 2145 in a region where the second groove 21451 is arranged. A minimum width of a groove bottom surface of the second groove 21451 is D, and a thickness of the second weak portion 2145 is H, meeting: S=D×H. The cross-sectional area of the weak section perpendicular to its extension direction can be indirectly obtained by measuring the width of the groove bottom surface of the second groove 21451 and the thickness of the second weak portion 2145 (the thickness of the second weak portion 2145 can be obtained based on a difference between the thickness of the pressure relief component 214 and the depth of the second groove 21451).

The value of the cross-sectional area of the second weak portion 2145 perpendicular to its extension direction may be: S=0.008 mm², 0.009 mm², 0.01 mm², 0.03 mm², 0.05 mm², 0.08 mm², 0.1 mm², 0.13 mm², 0.15 mm², 0.18 mm², 0.2 mm², 0.22 mm², 0.25 mm², 0.28 mm², 0.3 mm², 0.33 mm², 0.35 mm², 0.38 mm², 0.4 mm², 0.43 mm², 0.45 mm², or the like.

In order to make the technical problems addressed by, the technical solutions, and the beneficial effects of the embodiments of the present application clearer, further detailed description will be made below with reference to comparative examples 1 to 2 and embodiments 1 to 9. Apparently, the described embodiments are merely a part of embodiments of the present application, instead of all embodiments. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

### Embodiment 1

Battery cells 20 in various embodiments and comparative examples are all prepared and tested according to a method below.

### I. Preparation of a battery cell 20

### 1) Preparation of positive electrode plate

A positive electrode active material LiNi_{0.7}Co_{0.1}Mn_{0.1}O₂, a conductive agent Super P, and a binder polyvinylidene fluoride (PVDF) are prepared into a positive electrode slurry in N-methyl-pyrrolidone (NMP). A solid content in the positive electrode slurry is 50wt%, and a mass ratio of LiNi_{0.7}Co_{0.1}Mn_{0.1}O₂, Super P, and PVDF in the solid components is 8:1:1. The positive electrode slurry is coated on upper and lower surfaces of a current collector aluminum foil and dried at 85°C and then cold pressed. Then, it is trimmed, cut into pieces, and divided into strips, and then dried under a vacuum condition at 85°C for 4 hours to prepare a positive electrode plate.

### 2) Preparation of negative electrode plate

Graphite, a conductive agent Super P, a thickener carboxymethyl cellulose (CMC), and an adhesive styrenebutadiene rubber (SBR) are mixed evenly in deionized water to prepare a negative electrode slurry. A solid content in the negative electrode slurry is 30 wt%, and a mass ratio of the graphite, the silicon oxide, the Super P, the CMC, and the adhesive styrenebutadiene rubber (SBR) in the solid components is 88:7:3:2. The negative electrode slurry is coated on upper and lower surfaces of a current collector copper foil and dried at 85°C. Then, it is cold pressed, trimmed, cut into pieces, and divided into strips, and then dried under a vacuum condition at 120°C for 12 hours to prepare a negative electrode plate.

### 3) Preparation of electrolyte

In an argon atmosphere glove box (H₂O<0.1 ppm, O₂<0.1 ppm), fully dried electrolyte salt LiPF₆ is dissolved in a mixed solvent (the mixed solvent includes ethylene carbonate (EC) and diethyl carbonate (DEC), and ethylene carbonate (EC) and diethyl carbonate (DEC) are mixed in a mass ratio of 50:50), and mixed evenly to obtain a liquid electrolyte with a concentration of 1 mol/L.

### 4) Spacer

A 16 µm polyethylene (PE) film is used as a separator.

### 5) Preparation of a battery cell 20

The positive electrode plate, the separator, and the negative electrode plate are stacked in order, so that the separator is located between the positive electrode plate and the negative electrode plate to isolate the positive electrode plate from the negative electrode, and an electrode assembly 22 is obtained by winding them. The electrode assembly 22 is placed in an aluminum shell 21, and the prepared electrolyte is injected into the dried shell 21, followed by processes such as encapsulation, standing, formation, shaping, and capacity testing to complete the preparation of the battery cell 20. Moreover, and a first weak portion 2144 and a second weak portion 2145 are formed on a wall portion 211 of the shell 21 of the battery cell 20. The shell 21 of the battery cell 20 of Embodiment 1 is of a cuboid structure, and a case 215 of the shell 21 is a structure with an opening 2151 formed at one end, a wall of the case 215 opposite to an end cover 216 is a wall portion 211, the wall portion 211 is a rectangular wall, a first groove 2146 and a second groove 21451 are provided on the wall portion 211, the wall portion 211 forms the first weak portion 2144 in a region where the first groove 2146 is arranged, and the wall portion 211 forms the second weak portion 2145 in a region where the second groove 21451 is arranged. The first groove 2146 is of an "H"-shaped structure, that is, the first groove 2146 includes a first groove section 2143a, a second groove section 2143b, and a third groove section 2143c. The first groove section 2143a and the third groove section 2143c are arranged opposite to each other and both extend in a width direction of the wall portion 211. The second groove section 2143b is connected between the first groove section 2143a and the third groove section 2143c, and the second groove section 2143b is located in the middle of the wall portion 211 in the width direction of the wall portion 211. The wall portion 211 forms the first weak section 21441 in a region where the second groove section 2143b is arranged. The battery cell 20 has a thickness of 39 mm, a width of 203 mm, a shoulder height (a dimension of the shell 21 in a height direction) of 122.7 mm, and a capacity of 185 Ah.

The shell 21 has a dimension C in the width direction of the wall portion 211. The shell 21 includes a first wall 212 and a second wall 213 which are arranged opposite to each other in the width direction of the wall portion 211, and the wall portion 211 connects the first wall 212 and the second wall 213. In the width direction of the wall portion 211, the first wall 212 has a first outer surface 2121 facing away from an interior of the shell 21, and the second wall 213 has a second outer surface 2131 facing away from the interior of the shell 21. During measurement of the dimension C of the shell 21 in the width direction of the wall portion 211, a distance between the first outer surface 2121 and the second outer surface 2131 in the width direction of the wall portion 211 may be directly measured.

The dimension C of the shell 21 in the width direction of the wall portion 211, the minimum distance L between the first weak section 21441 and the second weak portion 2145 in the width direction of the wall portion 211, the width D of the groove bottom surface of the second groove 21451, and the thickness H of the second weak portion 2145 are all obtained through tomography and then measured by software.

The preparation methods of the battery cells 20 of Comparative Examples 1-2 and Embodiments 2-9 are the same as that of Embodiment 1, except that the dimension C of the outer shell 21 in the width direction of the wall portion 211, the minimum distance L between the first weak section 21441 and the second weak portion 2145 in the width direction of the wall portion 211, and the cross-sectional area S of the second weak portion 2145 perpendicular to its extension direction are different, as shown in Table 1.

### II. Testing of performance parameters

### 1. Method for measuring the number fatigue cycles of the battery cell 20

1) A special test fixture is prepared. Specifically, the fixture includes three 10 mm steel plates (a first steel plate, a second steel plate, and a third steel plate). Each steel plate can completely cover the first outer surface 2121 and the second outer surface 2131 of the battery cell 20. The first steel plate and the third steel plate are located at both ends of the fixture and are fixed by bolts. The second steel plate is located between the first steel plate and the third steel plate, and the second steel plate is constrained by a guide rail. The second steel plate can only translates in a thickness direction of the second steel plate.
2) The battery cell 20 is mounted between the first steel plate and the second steel plate, and a support structure is placed between the first outer surface 2121 of the battery cell 20 and the first steel plate and between the second outer surface 2131 and the second steel plate. The support structure may be a heat insulating pad or a water cooling plate (consistent with the material/structure between two adjacent battery cells 20 in the actual battery 100). The support structure may be compressed to provide expansion space for the battery cell 20 during a charge-discharge cycle aging process. The first outer surface 2121 and the second outer surface 2131 of the battery cell 20 are bonded to the support structure, the first steel plate is bonded to the corresponding support structure, the second steel plate is bonded to the corresponding support structure, and a pressure sensor is arranged between the second steel plate and the third steel plate.
3) The position of the second steel plate is adjusted by adjusting a pre-tightening force of the bolts, the pressure sensor is observed so that an initial extrusion force on the battery cell 20 is 2000 N, and the positive electrode terminal and the negative electrode terminal of the battery cell 20 are connected to a charge-discharge device.
4) The battery cell 20 and the fixture are placed in a constant temperature environment of 25±2°C, and the test starts after the battery cell 20 reaches temperature equilibrium.
5) The test steps are carried out in accordance with Chapter 6.4 "Standard Cycle Life" of GBT31484-2015 (Cycle Life Requirements and Test Methods for Power Batteries 100 of Electric Vehicles), with a test cycle termination condition changed to "do not stop the test until the first weak portion 2144 arranged on the wall portion 211 is damaged".

Specifically, the test is performed according to the following steps:
a) Perform discharging to 2.8 v with a current 1I₁(A);
b) Let it stand for no less than 30 minutes or according to a manufacturer's specified resting conditions;
c) Perform charging in accordance with method 6.1.1.3 of GBT31484-2015 (Cycle Life Requirements and Test Methods for Power Batteries 100 of Electric Vehicles);
d) Let it stand for no less than 30 minutes;
e) Perform discharging to 2.8 v with the current 1I₁(A); and
f) Repeat steps b) to e), and do not stop the test until the first groove 2146 arranged on the wall portion 211 is damaged.

That is, during the test, the region on the wall portion 211 of the battery cell 20 where the first groove 2146 is arranged is continuously observed until the region is damaged and leaks, and the number of cycles is recorded as the number of fatigue cycles of the battery cell 20. A larger number of fatigue cycles of the battery cell 20 indicates a lower probability that the battery cell 20 opens the valve to cause liquid leakage due to gas production during long-term use, and indicates a longer service life.

### 2. Method for testing thermal runaway of the battery cell 20

1. Select a heating plate according to the size of the battery cell 20, where the size of the heating plate should cover the first outer surface 2121 and the second outer surface 2131 of the battery cell 20 as much as possible (covering area ≥ 60%);
2. Charge the battery cell 20 to 100% SOC before testing and ensure that the temperature of the battery cell 20 is 25±5°C;
3. Sensor layout:
   1) Arrangement of temperature sensing wires: Attach a layer of Teflon to a central region of each of the first outer surface 2121 and the second outer surface 2131 of the battery cell 20, arrange a temperature sensing wire above the Teflon, and attach another layer of Teflon;
   2) Voltage sampling wire arrangement: Attach a layer of Teflon to each of the positive electrode terminal, the negative electrode terminal, and the shell 21 of the battery cell 20; and place the voltage sampling wire above the Teflon and then attach another layer of Teflon;
   3) Air pipe arrangement: Drill a hole in the wall portion 211 of the battery cell 20, in the length direction of the wall portion 211, the drilling position is located at a midpoint between the first groove 2146 and a side surface of the case 215 (an outer surface of a wall adjacent to the wall portion 211 in the length direction of the wall portion 211 of the case 215), insert an air pipe into the hole and seal it, and connect the air pipe to an air pressure sensor; and
   4) Connect the temperature sensing wire, the voltage sampling wire, and the air pressure sensor to a data acquisition instrument to collect and analyze data in real time. The collection frequency of the data acquisition instrument is ≤0.1S;
4. Assemble the fixture: Completely cover the first outer surface 2121 and the second outer surface 2131 of the battery cell 20 with the fixture, with a clamping force of 3000 N, and an arrangement order of the fixture, the heating plate, and the battery cell 20 being: fixture + heating plate + battery cell 20 + fixture;
5. Test: Open a plurality of channels to collect temperature, voltage, and air pressure data, and then turn on the heating plate at a power of 500 W to heat the battery cell 20 until thermal runaway occurs in the battery cell 20.
6. Obtaining a pressure gas retention duration of the battery cell 20: Determine a thermal runaway moment and a valve opening moment according to the temperature, voltage, and air pressure data collected from the plurality of channels, and obtain the pressure gas retention duration of the battery cell 20 according to an equation: pressure gas retention duration = valve opening moment - thermal runaway moment.

Thermal runaway determination criteria: a) A triggered object produces a voltage drop, and the drop exceeds 25% of an initial voltage; b) A temperature at a detection point reaches a maximum operating temperature specified by a manufacturer; and c) At the detection point, a temperature rise rate is dT/dt≥1°C/s and lasts for more than 3s. When a) and c) or b) and c) occur, it is determined that thermal runaway has occurred and the thermal runaway moment is determined.

Determination of valve opening moment: When the air pressure drops by more than 25%, it can be determined that the valve is open (the wall portion 211 cracks along the first groove 2146), and the moment when the air pressure begins to drop is the valve opening moment.

### III. Test results

Test results of Comparative Examples 1 to 2 and Embodiments 1 to 9 are shown in Table 1 below.

**Table 1**

| Serial number | C(mm) | S(mm²) | L(mm) | Number fatigue cycles of the battery cell 20 | Gas retention duration (s) of the battery cell 20 |
|---|---|---|---|---|---|
| Comparative Example 1 | 20-40 | 1.1 | 2 | 3524 | 6 |
| Comparative Example 2 | 20-40 | 0.0008 | 50 | 889 | 0.8 |
| Embodiment 1 | 20-40 | 0.008 | 3.3 | 1058 | 2.5 |
| Embodiment 2 | 20-40 | 0.03 | 6.6 | 1331 | 2.2 |
| Embodiment 3 | 20-40 | 0.10 | 10 | 1891 | 1.8 |
| Embodiment 4 | 20-40 | 0.15 | 18 | 2315 | 1.5 |
| Embodiment 5 | 40-60 (excluding 40) | 0.03 | 6.6 | 1307 | 2.1 |
| Embodiment 6 | 40-60 (excluding 40) | 0.45 | 28 | 3218 | 3.7 |
| Embodiment 7 | 60-100 (excluding 60) | 0.03 | 10 | 1311 | 2.0 |
| Embodiment 8 | 60-100 (excluding 60) | 0.1 | 28 | 1788 | 1.2 |
| Embodiment 9 | 60-100 (excluding 60) | 0.15 | 48 | 2138 | 1.3 |

Referring to Table 1, as shown in Comparative Example 1, when S≥0.008 mm and L≤3.3 mm, the gas retention duration of the battery cell 20 during thermal runaway is long, and the timeliness of pressure relief of the battery cell 20 during thermal runaway is poor.

Referring to Table 1, as shown in Comparative Example 2, when S≤0.45 mm2 and L≥48 mm, the number of fatigue cycles of the battery cell 20 is small, and the predetermined pressure relief region 21431 is easily affected by the pressure change inside the battery cell 20 to cause the pressure relief component 214 to crack prematurely along the first weak portion 2144, and the service life of the battery cell 20 is short.

Referring to Table 1, as shown in Embodiments 1 to 9, when 3.3 mm≤L≤48 mm and 0.008 mm²≤S≤0.45 mm2, the gas retention duration of the battery cell 20 during thermal runaway is short, the pressure relief of the battery cell 20 during thermal runaway is more promptly, and the number of fatigue cycles of the battery cell 20 is large. The predetermined pressure relief region 21431 is not easily affected by the pressure change inside the battery cell 20 to cause the pressure relief component 214 to crack prematurely along the first weak portion 2144, and the service life of the battery cell 20 is long.

The pressure relief component 214 is provided with the first weak portion 2144, so that the pressure relief component 214 is capable of cracking along at least a part of the first weak portion 2144 during the pressure relief of the battery cell 20, so as to achieve relief of an internal pressure of the battery cell 20. The pressure relief component 214 is further provided with the second weak portion 2145. The first weak portion 2144 defines the predetermined pressure relief region 21431. The second weak portion 2145 is capable of guiding at least a part of the predetermined pressure relief region 21431 to flip over, so as to open at least a part of the predetermined pressure relief region 21431 for pressure relief. The second weak portion 2145 plays an auxiliary role in the predetermined pressure relief region 21431, so that it is easier for the predetermined pressure relief region 21431 to flip over, which is conducive to increasing an opening area of the predetermined pressure relief region 21431. Since the predetermined pressure relief region 21431 needs to be flipped open under the guidance of the second weak portion 2145, the minimum distance between the first weak section 21441 and the second weak portion 2145 can be regarded as a power arm for the predetermined pressure relief region 21431 to flip open. The larger the minimum distance between the first weak section 21441 and the second weak portion 2145 is, the larger the power arm for the predetermined pressure relief region 21431 to flip open is, and the smaller a force required to push the predetermined pressure relief region 21431 to flip open can be. That is, the larger L is, the easier it is for the predetermined pressure relief region 21431 to flip open, and the smaller L is, the more difficult it is for the predetermined pressure relief region 21431 to flip open. In addition, it should be noted that the magnitude of L may affect the speed at which the predetermined pressure relief region 21431 flips open during the pressure relief of the battery cell 20. The larger L is, the faster the speed at which the predetermined pressure relief region 21431 flips open during the pressure relief of the battery cell 20. The smaller L is, the slower the speed at which the predetermined pressure relief region 21431 flips open during the pressure relief of the battery cell 20. When L≥3.3 mm, the power arm for flipping open the predetermined pressure relief region 21431 is large, which facilitates the rapid flipping open of the predetermined pressure relief region 21431, and is conducive to improving the timeliness of the pressure relief of the battery cell 20. When L≤48 mm, the power arm for flipping open the predetermined pressure relief region 21431 will not be too large, so that the first weak section 21441 does not easily crack due to a change in an air pressure inside the battery cell 20, which is conducive to improving the reliability of the battery cell 20. Therefore, when 3.3 mm≤L≤48 mm, the first weak section 21441 does not easily crack due to the change in the air pressure inside the battery cell 20, and it is also convenient for the predetermined pressure relief region 21431 to be quickly flipped open, which is conducive to improving the timeliness of the pressure relief of the battery cell 20. When S≥0.008 mm2, the cross-sectional area of the second weak portion 2145 perpendicular to its extension direction is large, so that the second weak portion 2145 does not easily crack due to the change in the air pressure inside the battery cell 20, which is conducive to improving the reliability of the battery cell 20. When S≤0.45 mm2, the cross-sectional area of the second weak portion 2145 perpendicular to its extension direction is not too large, which is conducive to reducing a resistance to flipping over of the predetermined pressure relief region 21431, facilitates the rapid flipping open of the predetermined pressure relief region 21431, and is conducive to improving the timeliness of the pressure relief of the battery cell 20. Therefore, when 0.008 mm²≤S≤0.45 mm2, the second weak portion 2145 does not easily crack due to the change in the air pressure inside the battery cell 20, and it is also convenient for the predetermined pressure relief region 21431 to be quickly flipped open, which is conducive to improving the timeliness of the pressure relief of the battery cell 20.

In some embodiments, in the first direction, the dimension of the shell 21 is C. When 20 mm≤C≤40 mm, 3.3 mm≤L≤18 mm is met. When 40 mm≤C≤60 mm, 6.6 mm≤L≤28 mm is met. when 60 mm≤C≤100 mm, 10 mm≤L≤48 mm is met.

When 20 mm≤C≤40 mm, the minimum distance between the first weak section 21441 and the second weak portion 2145 in the first direction may be: L=3.3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, or the like.

Referring to Table 1, as shown in Embodiments 1 to 4, when 20 mm ≤C≤ 40 mm and 3.3 mm ≤L≤ 18 mm, the number of fatigue cycles of the battery cell 20 is large and the gas retention duration of the battery cell 20 is short, taking both the number of fatigue cycles and the gas retention duration into consideration.

When 40 mm<C≤60 mm, the minimum distance between the first weak section 21441 and the second weak portion 2145 in the first direction may be: L= 6.7 mm, 8 mm, 10 mm, 12 mm, 14 mm, 16 mm, 18 mm, 20 mm, 22 mm, 24 mm, 26 mm, 28 mm, or the like.

Referring to Table 1, as shown in Embodiments 5 to 6, when 40 mm<C≤ 60 mm and 6.6 mm<L≤ 28 mm, the number of fatigue cycles of the battery cell 20 is large and the gas retention duration of the battery cell 20 is short, taking both the number of fatigue cycles and the gas retention duration into consideration.

When 60 mm<C≤100 mm, the minimum distance between the first weak section 21441 and the second weak portion 2145 in the first direction may be: L=11 mm, 16 mm, 20 mm, 24 mm, 28 mm, 32 mm, 36 mm, 40 mm, 44 mm, 48 mm, or the like.

Referring to Table 1, as shown in Embodiments 7 to 9, when 60 mm<C≤ 100 mm and 10 mm<L≤ 48 mm, the number of fatigue cycles of the battery cell 20 is large and the gas retention duration of the battery cell 20 is short, taking both the number of fatigue cycles and the gas retention duration into consideration.

For a battery cell 20 with a size of 20 mm≤C≤40 mm, when 3.3 mm≤L≤18 mm, the minimum distance between the first weak section 21441 and the second weak portion 2145 in the first direction is moderate, which is conducive to further reducing the risk of the predetermined pressure relief region 21431 being affected by the change of the internal pressure of the battery cell 20 and causing the pressure relief component 214 to prematurely crack along the first weak portion 2144, and helps the pressure relief component 214 crack along the first weak portion 2144 more promptly when thermal runaway occurs in the battery cell 20, thereby improving the timeliness of the pressure relief of the battery cell 20 and thus improving the reliability of the battery cell 20. For a battery cell 20 with a size of 40 mm<C≤60 mm, when 6.6 mm<L≤28 mm, it is conducive to further reducing the risk of the predetermined pressure relief region 21431 being affected by the change of the internal pressure of the battery cell 20 and causing the pressure relief component 214 to prematurely crack along the first weak portion 2144, and helps the pressure relief component 214 crack along the first weak portion 2144 more promptly when thermal runaway occurs in the battery cell 20, thereby improving the timeliness of the pressure relief of the battery cell 20 and thus improving the reliability of the battery cell 20. For a battery cell 20 with a size of 60 mm<C≤100 mm, when 10 mm<L≤48 mm, it is conducive to further reducing the risk of the predetermined pressure relief region 21431 being affected by the change of the internal pressure of the battery cell 20 and causing the pressure relief component 214 to prematurely crack along the first weak portion 2144, and helps the pressure relief component 214 crack along the first weak portion 2144 more promptly when thermal runaway occurs in the battery cell 20, thereby improving the timeliness of the pressure relief of the battery cell 20 and thus improving the reliability of the battery cell 20.

Optionally, 0.03 mm²≤S₂≤0.15 mm².

The value of the cross-sectional area of the second weak portion 2145 perpendicular to its extension direction may be: S₂=0.03 mm², 0.035 mm², 0.04 mm², 0.045 mm², 0.05 mm², 0.055 mm², 0.06 mm², 0.065 mm², 0.07 mm², 0.075 mm², 0.08 mm², 0.085 mm², 0.09 mm², 0.095 mm², 0.1 mm², 0.105 mm², 0.11 mm², 0.115 mm², 0.12 mm², 0.125 mm², 0.13 mm², 0.135 mm², 0.14 mm², 0.145 mm², 0.15 mm², or the like.

When S₂≥0.03 mm², a risk of the second weak portion 2145 cracking due to the change in the gas pressure inside the battery cell 20 can be further reduced, which is conducive to improving the reliability of the battery cell 20. When S₂≤0.15 mm², a resistance to flipping over of the predetermined pressure relief region 21431 is smaller, which facilitates the rapid flipping open of the predetermined pressure relief region 21431, and is conducive to improving the timeliness of the pressure relief of the battery cell 20. Therefore, when 0.03 mm²≤S₂≤0.15 mm², the second weak portion 2145 does not easily crack due to the change in the air pressure inside the battery cell 20, and it is also convenient for the predetermined pressure relief region 21431 to be quickly flipped open, which is conducive to improving the timeliness of the pressure relief of the battery cell 20.

Referring to FIG. 3, FIG. 4, FIG. 5, FIG. 6, and FIG. 7, in some embodiments, the pressure relief component 214 is provided with a first groove 2146, and the pressure relief component 214 forms the first weak portion 2144 in a region where the first groove 2146 is arranged.

Referring to FIG. 6 and FIG. 7, the thickness direction of the wall portion 211 is a direction Y shown in the figure.

In the thickness direction of the wall portion 211, the wall portion 211 has the first surface 2111 and the second surface 2112 that are oppositely arranged, where the first surface 2111 faces away from the interior of the shell 21, and the second surface 2112 faces the interior of the shell 21. The first groove 2146 may be arranged on the first surface 2111, or arranged on the second surface 2112. Referring to FIG. 5, FIG. 6, and FIG. 7, in the embodiments shown in the figures, the first groove 2146 is arranged on the first surface 2111.

The first groove 2146 can be formed by various processing methods, such as stamping and cold heading. The first groove 2146 may be molded by stamping or cold heading, so that the groove wall of the first groove 2146 will undergo cold work hardening (the grain arrangement changes, thus resulting in lattice distortion, reducing the metal plasticity, and increasing the material hardness), so that the groove has an enhanced ability to resist an external impact, and is less likely to be damaged by the external impact. This helps reduce the risk of leakage from the pressure relief component 214.

By forming the first weak portion 2144 by opening the first groove 2146 in the pressure relief component 214, the operation is simple and convenient, and is low in cost.

Referring to FIG. 3, FIG. 4, FIG. 5, FIG. 6, and FIG. 7, in some embodiments, the pressure relief component 214 is provided with a second groove 21451, and the pressure relief component 214 forms the second weak portion 2145 in a region where the second groove 21451 is arranged. A minimum width of a groove bottom surface of the second groove 21451 is D, and a minimum thickness of the second weak portion 2145 is H, meeting: S=D×H.

In the thickness direction of the wall portion 211, the wall portion 211 has the first surface 2111 and the second surface 2112 that are oppositely arranged, where the first surface 2111 faces away from the interior of the shell 21, and the second surface 2112 faces the interior of the shell 21. The second groove 21451 may be arranged on the first surface 2111, or arranged on the second surface 2112. Referring to FIG. 5, FIG. 6, and FIG. 7, in the embodiments shown in the figures, the second groove 21451 is arranged on the second surface 2112.

The second groove 21451 can be formed by various processing methods, such as stamping and cold heading. The second groove 21451 may be molded by stamping or cold heading, so that the groove wall of the second groove 21451 will undergo cold work hardening (the grain arrangement changes, thus resulting in lattice distortion, reducing the metal plasticity, and increasing the material hardness), so that the groove has an enhanced ability to resist an external impact, and is less likely to be damaged by the external impact. This helps reduce the risk of leakage from the pressure relief component 214.

D represents the minimum width of the groove bottom surface of the second groove 21451, that is, the width of a narrowest position of the groove bottom surface of the second groove 21451. It should be noted that an end portion of the second groove 21451 generally adopts a rounded transition. During measuring of the minimum width of the groove bottom surface of the second groove 21451, a minimum width of the second groove 21451 outside the rounded transition region should be measured, that is, the rounded transition position should be avoided during the measurement.

H represents the minimum thickness of the second weak portion 2145, that is, the thickness of a thinnest position of the second weak portion 2145. It should be noted that the groove bottom surface of the second groove 21451 and a groove side surface of the second groove 21451 generally adopt a rounded transition. During measuring of the minimum width of the minimum thickness of the second weak portion 2145, the rounded transition position should be avoided during the measurement. The minimum thickness of the second weak portion 2145 can be obtained based on a difference between the thickness of the pressure relief component 214 and the depth of the second groove 21451, or obtained through tomography, or measured after the second weak portion 2145 is cut away.

A cross-sectional area of the cross section of the second weak portion 2145 perpendicular to its extension direction is a product of the minimum width of the groove bottom surface of the second groove 21451 and the minimum thickness of the second weak portion 2145, that is, S=D×H.

By forming the second weak portion 2145 by opening the second groove 21451 in the pressure relief component 214, the operation is simple and convenient, and is low in cost. By measuring the width of the groove bottom surface of the second groove 21451 and the minimum thickness of the second weak portion 2145, the cross-sectional area of the second weak portion 2145 perpendicular to its extension direction can be indirectly obtained according to S=D×H.

In some embodiments, 0.01 mm≤D≤0.5 mm.

The minimum width of the groove bottom surface of the second groove 21451 may be: D=0.01 mm, 0.05 mm, 0.1 mm, 0.15 mm, 0.2 mm, 0.25 mm, 0.3 mm, 0.35 mm, 0.4 mm, 0.45 mm, 0.5 mm, or the like.

When D≥0.01 mm, the width of the groove bottom surface of the second groove 21451 is large, which is further capable of reducing the risk of the second weak portion 2145 cracking due to the change in the air pressure inside the battery cell 20, and is conducive to improving the reliability of the battery cell 20. When D≤0.5 mm, the width of the groove bottom surface of the second groove 21451 is not too large, which is conducive to reducing a resistance to flipping over of the predetermined pressure relief region 21431, facilitates the rapid flipping open of the predetermined pressure relief region 21431, and is conducive to improving the timeliness of the pressure relief of the battery cell 20. Therefore, when 0.01 mm≤D≤0.5 mm, the second weak portion 2145 does not easily crack due to the change in the air pressure inside the battery cell 20, and it is also convenient for the predetermined pressure relief region 21431 to be quickly flipped open, which is conducive to improving the timeliness of the pressure relief of the battery cell 20.

In some embodiments, 0.04 mm≤D≤0.3 mm.

The minimum width of the groove bottom surface of the second groove 21451 may be: D=0.04 mm, 0.05 mm, 0.08 mm, 0.1 mm, 0.12 mm, 0.15 mm, 0.18 mm, 0.2 mm, 0.22 mm, 0.25 mm, 0.28 mm, 0.3 mm, or the like.

When D≥0.04 mm, a risk of the second weak portion 2145 cracking due to the change in the gas pressure inside the battery cell 20 can be further reduced, which is conducive to improving the reliability of the battery cell 20. When D≤0.3 mm, a resistance to flipping over of the predetermined pressure relief region 21431 is smaller, which facilitates the rapid flipping open of the predetermined pressure relief region 21431, and is conducive to improving the timeliness of the pressure relief of the battery cell 20. Therefore, when 0.04 mm≤D≤0.3 mm, the second weak portion 2145 does not easily crack due to the change in the air pressure inside the battery cell 20, and it is also convenient for the predetermined pressure relief region 21431 to be quickly flipped open, which is conducive to improving the timeliness of the pressure relief of the battery cell 20.

Optionally, 0.06 mm≤D≤0.15 mm.

The minimum width of the groove bottom surface of the second groove 21451 may be: D=0.06 mm, 0.07 mm, 0.08 mm, 0.09 mm, 0.1 mm, 0.11 mm, 0.12 mm, 0.13 mm, 0.14 mm, 0.15 mm, or the like.

When D≥0.06 mm, a risk of the second weak portion 2145 cracking due to the change in the gas pressure inside the battery cell 20 can be further reduced, which is conducive to improving the reliability of the battery cell 20. When D≤0.15 mm, a resistance to flipping over of the predetermined pressure relief region 21431 is smaller, which facilitates the rapid flipping open of the predetermined pressure relief region 21431, and is conducive to improving the timeliness of the pressure relief of the battery cell 20. Therefore, when 0.06 mm≤D≤0.15 mm, the second weak portion 2145 does not easily crack due to the change in the air pressure inside the battery cell 20, and it is also convenient for the predetermined pressure relief region 21431 to be quickly flipped open, which is conducive to improving the timeliness of the pressure relief of the battery cell 20.

In some embodiments, 0.1 mm≤H≤2 mm.

The value of the minimum thickness of the second weak portion 2145 may be: H=0.1 mm, 0.3 mm, 0.5 mm, 0.7 mm, 0.9 mm, 1.1 mm, 1.3 mm, 1.5 mm, 1.7 mm, 1.9 mm, 2 mm, or the like.

When H≥0.1 mm, the minimum thickness of the second weak portion 2145 is large, which is capable of reducing the risk of the second weak portion 2145 cracking due to the change in the air pressure inside the battery cell 20, and is conducive to improving the reliability of the battery cell 20. When H≤2 mm, the minimum thickness of the second weak portion 2145 is not too large, which is conducive to reducing a resistance to flipping over of the predetermined pressure relief region 21431, facilitates the rapid flipping open of the predetermined pressure relief region 21431, and is conducive to improving the timeliness of the pressure relief of the battery cell 20. Therefore, when 0.1 mm≤H≤2 mm, the second weak portion 2145 does not easily crack due to the change in the air pressure inside the battery cell 20, and it is also convenient for the predetermined pressure relief region 21431 to be quickly flipped open, which is conducive to improving the timeliness of the pressure relief of the battery cell 20.

In some embodiments, 0.2 mm≤H≤1.5 mm.

The value of the minimum thickness of the second weak portion 2145 may be: H=0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, or the like.

When H≥0.2 mm, a risk of the second weak portion 2145 cracking due to the change in the gas pressure inside the battery cell 20 can be further reduced, which is conducive to improving the reliability of the battery cell 20. When H≤1.5 mm, a resistance to flipping over of the predetermined pressure relief region 21431 is smaller, which facilitates the rapid flipping open of the predetermined pressure relief region 21431, and is conducive to improving the timeliness of the pressure relief of the battery cell 20. Therefore, when 0.2 mm≤H≤1.5 mm, the second weak portion 2145 does not easily crack due to the change in the air pressure inside the battery cell 20, and it is also convenient for the predetermined pressure relief region 21431 to be quickly flipped open, which is conducive to improving the timeliness of the pressure relief of the battery cell 20.

Optionally, 0.5 mm≤H≤1 mm.

The value of the minimum thickness of the second weak portion 2145 may be: H=0.5 mm, 0.55 mm, 0.6 mm, 0.65 mm, 0.7 mm, 0.75 mm, 0.8 mm, 0.85 mm, 0.9 mm, 0.95 mm, 1 mm, or the like.

When H≥0.5 mm, a risk of the second weak portion 2145 cracking due to the change in the gas pressure inside the battery cell 20 can be further reduced, which is conducive to improving the reliability of the battery cell 20. When D≤1 mm, a resistance to flipping over of the predetermined pressure relief region 21431 is smaller, which facilitates the rapid flipping open of the predetermined pressure relief region 21431, and is conducive to improving the timeliness of the pressure relief of the battery cell 20. Therefore, when 0.5 mm≤H≤1 mm, the second weak portion 2145 does not easily crack due to the change in the air pressure inside the battery cell 20, and it is also convenient for the predetermined pressure relief region 21431 to be quickly flipped open, which is conducive to improving the timeliness of the pressure relief of the battery cell 20.

Referring to FIG. 3, FIG. 4, FIG. 5, FIG. 6, and FIG. 7, in some embodiments, the second groove 21451 is arranged on a surface of the pressure relief component 214 facing the interior of the shell 21.

In the thickness direction of the wall portion 211, the wall portion 211 has the first surface 2111 and the second surface 2112 that are oppositely arranged, where the first surface 2111 faces away from the interior of the shell 21, and the second surface 2112 faces the interior of the shell 21. The second groove 21451 is arranged on the second surface 2112.

Taking the stamping method for forming the second groove 21451 as an example, the second groove 21451 can be stamped on the pressure relief component 214 in a direction from the second surface 2112 to the first surface 2111.

By arranging the second groove 21451 on the surface of the pressure relief component 214 facing the interior of the shell 21, the tension that the predetermined pressure relief region 21431 needs to overcome when flipping is small, thereby facilitating the predetermined pressure relief region 21431 to flip open quickly, which is conducive to improving the reliability of the battery cell 20.

Referring to FIG. 3, FIG. 4, FIG. 5, FIG. 6, and FIG. 7, in some embodiments, the pressure relief component 214 has the first surface 2111 and the second surface 2112 arranged opposite to each other in the thickness direction of the wall portion 211. The first surface 2111 is provided with the first groove 2146, and the pressure relief component 214 forms the first weak portion 2144 in the region where the first groove 2146 is arranged. The second surface 2112 is provided with the second groove 21451, and the pressure relief component 214 forms the second weak portion 2145 in the region where the second groove 21451 is arranged.

The first groove 2146 is arranged on the first surface 2111, the second groove 21451 is arranged on the second surface 2112, and the first groove 2146 and the second groove 21451 are arranged on two oppositely arranged surfaces of the pressure relief component 214 in the thickness direction of the wall portion 211.

In the thickness direction of the wall portion 211, the first weak portion 2144 is a portion of the pressure relief component 214 located between the groove bottom surface of the first groove 2146 farthest from the first surface 2111 and the second surface 2112. The second weak portion 2145 is a portion of the pressure relief component 214 located between the groove bottom surface of the second groove 21451 farthest from the second surface 2112 and the first surface 2111.

The first groove 2146 can be formed by various processing methods, such as stamping and cold heading. Taking the stamping method for forming the first groove 2146 as an example, the first groove 2146 can be stamped on the pressure relief component 214 in a direction from the first surface 2111 to the second surface 2112.

The first groove 2146 may be molded by stamping or cold heading, so that the groove wall of the first groove 2146 will undergo cold work hardening (the grain arrangement changes, thus resulting in lattice distortion, reducing the metal plasticity, and increasing the material hardness), so that the groove has an enhanced ability to resist an external impact, and is less likely to be damaged by the external impact. This helps reduce the risk of leakage from the pressure relief component 214.

By forming the first weak portion 2144 and the second weak portion 2145 by opening the first groove 2146 and the second groove 21451 in the pressure relief component 214, the operation is simple and convenient, and is low in cost. By arranging the first groove 2146 and the second groove 21451 on the first surface 2111 and the second surface 2112 of the pressure relief component 214 respectively, so that the first groove 2146 and the second groove 21451 are respectively located on both sides of the pressure relief component 214, it is convenient to process the first groove 2146 and the second groove 21451 on both sides of the pressure relief component 214 respectively, which is conducive to reducing the mutual influence of the first groove 2146 and the second groove 21451 during the processing.

Optionally, the first surface 2111 is a surface of the pressure relief component 214 facing away from the interior of the shell 21, and the second surface 2112 is a surface of the pressure relief component 214 facing the interior of the shell 21.

The first surface 2111 is the surface of the pressure relief component 214 facing away from the interior of the shell 21, that is, an outer surface of the pressure relief component 214. The second surface 2112 is the surface of the pressure relief component 214 facing the interior of the shell 21, that is, an inner surface of the pressure relief component 214.

The first groove 2146 is arranged on the outer surface of the pressure relief component 214, or and the second groove 21451 is arranged on the inner surface of the pressure relief component 214.

By arranging the first groove 2146 on the surface of the pressure relief component 214 away from the interior of the shell 21, the tension that the first weak portion 2144 needs to overcome when cracking is small, and it is easy to crack. By arranging the second groove 21451 on the surface of the pressure relief component 214 facing the interior of the shell 21, the tension that the predetermined pressure relief region 21431 needs to overcome when flipping is small, thereby facilitating the predetermined pressure relief region 21431 to flip open quickly, which is conducive to improving the reliability of the battery cell 20.

Referring to FIG. 3, FIG. 4, FIG. 5, FIG. 6, and FIG. 7, in some embodiments, the pressure relief component 214 is provided with a first groove 2146, and the pressure relief component 214 forms the first weak portion 2144 in a region where the first groove 2146 is arranged. The first groove 2146 includes a first groove section 2143a, a second groove section 2143b, and a third groove section 2143c. The first groove section 2143a and the third groove section 2143c are arranged oppositely. The second groove section 2143b connects the first groove section 2143a and the third groove section 2143c. In the first direction, the second groove section 2143b and the second weak portion 2145 are arranged at an interval, and the pressure relief component 214 forms the first weak section 21441 in the region where the second groove section 2143b is arranged.

The first groove section 2143a and the third groove section 2143c are arranged at an interval and at least partially opposite to each other. Optionally, the first groove section 2143a and the third groove section 2143c both extend in the first direction.

The second groove section 2143b connects the first groove section 2143a and the third groove section 2143c, that is, the second groove section 2143b is located between the first groove section 2143a and the third groove section 2143c, and two ends of the second groove section 2143b are respectively connected to the first groove section 2143a and the third groove section 2143c. Of course, in another embodiment, the two ends of the second groove section 2143b can extend out of the first groove section 2143a and the third groove section 2143c, respectively.

One weak section is formed at the bottom of each of the first groove section 2143a, the second groove section 2143b, and the third groove section 2143c, and the three weak sections together define the predetermined pressure relief region 21431. Referring to FIG. 5, a line connecting a free end of the first groove section 2143a and a free end of the second groove section 2143b is a first connecting line, and the first connecting line is arranged opposite to the second groove section 2143b in the first direction. A closed area surrounded by the weak section corresponding to the first groove section 2143a, the weak section corresponding to the second groove section 2143b, the weak section corresponding to the third groove section 2143c, and the first connecting line is the predetermined pressure relief region 21431. In other words, the first groove section 2143a, the second groove section 2143b, and the third groove section 2143c are structures arranged along the edge of the predetermined pressure relief region 21431, so that the predetermined pressure relief region 21431 can be opened with the first groove section 2143a, the second groove section 2143b, and the third groove section 2143c as boundaries, that is, the predetermined pressure relief region 21431 is formed in the region enclosed by the first groove section 2143a, the second groove section 2143b, and the third groove section 2143c, so that a part of the pressure relief component 214 located in the predetermined pressure relief region 21431 can be opened with the first groove section 2143a, the second groove section 2143b, and the third groove section 2143c as boundaries during the pressure relief of the battery cell 20, thereby relieving the internal pressure of the battery cell 20.

In particular, in the first direction, the second groove section 2143b and the second weak portion 2145 are arranged at an interval, and the first weak section 21441 is formed at the bottom of the second groove section 2143b.

Referring to FIG. 8, FIG. 8 is a bottom view of a shell 21 of a battery cell 20 according to yet other embodiments of the present application. The shape of the first groove 2146 formed by the first groove section 2143a, the second groove section 2143b, and the third groove section 2143c can be a "U"-shaped structure, that is, the second groove section 2143b has one end connected to one end of the first groove section 2143a, and the other end connected to one end of the third groove section 2143c, so as to form a predetermined pressure relief region 21431 on the pressure relief component 214. At this point, the first connecting line closes an opening end of the U-shaped structure.

The first groove 2146 includes the first groove section 2143a, the second groove section 2143b, and the third groove section 2143c, and the second groove section 2143b connects the first groove section 2143a and the third groove section 2143c, so that the pressure relief component 214 is capable of cracking along the first groove section 2143a, the second groove section 2143b, and the third groove section 2143c during the pressure relief of the battery cell 20, so as to open the predetermined pressure relief region 21431 to relieve the internal pressure of the battery cell 20. The first groove 2146 with such a structure makes a connection position between the first groove section 2143a and the second groove section 2143b and a connection position between the first groove section 2143a and the third groove section 2143c weaker, and is easier to crack and open the predetermined pressure relief region 21431 for pressure relief. Moreover, a pressure relief area and a pressure relief rate of the battery cell 20 are capable of being further improved.

Referring to FIG. 3, FIG. 4, FIG. 5, FIG. 6, and FIG. 7, the first weak portion 2144 defines two predetermined pressure relief regions 21431, the two predetermined pressure relief regions 21431 are respectively located on both sides of the second groove section 2143b, and each of the predetermined pressure relief regions 21431 is correspondingly provided with at least one second weak portion 2145.

Referring to FIG. 5, the shape of the first groove 2146 formed by the first groove section 2143a, the second groove section 2143b, and the third groove section 2143c can be an "H"-shaped structure to form two predetermined pressure relief regions 21431 on the pressure relief component 214, and the two predetermined pressure relief regions 21431 are respectively located on both sides of the first groove section 2143a.

Each of the predetermined pressure relief regions 21431 may be provided with one second weak portion 2145, two second weak portions 2145, three second weak portions 2145, or more than three second weak portions 2145. As shown in FIG. 5, each of the predetermined pressure relief regions 21431 is correspondingly provided with one second weak portion 2145.

The first weak portion 2144 defines two predetermined pressure relief regions 21431, each of the predetermined pressure relief regions 21431 is correspondingly provided with at least one second weak portion 2145. During the pressure relief of the battery cell 20, the two predetermined pressure relief regions 21431 are flipped open under the guidance of the corresponding second weak portions 2145, so that the battery cell 20 has a larger pressure relief area, which is conducive to improving the pressure relief rate of the battery cell 20 and improving the reliability of the battery cell 20.

Referring to FIG. 3, FIG. 4, FIG. 5, FIG. 6, and FIG. 7, in some embodiments, each of the predetermined pressure relief regions 21431 is correspondingly provided with one second weak portion 2145. The pressure relief component 214 is provided with a second groove 21451, and the pressure relief component 214 forms the second weak portion 2145 in a region where the second groove 21451 is arranged. The first groove 2146 is located between the two second grooves 21451.

The pressure relief component 214 forms the second weak portion 2145 in the region where the second groove 21451 is arranged, and each of the predetermined pressure relief regions 21431 is correspondingly provided with one second groove 21451. In the first direction, the two second grooves 21451 are located on both sides of the second groove section 2143b.

As shown in FIG. 5, in the first direction, the first groove 2146 is located between the two second grooves 21451, that is, in the first direction, the first groove section 2143a, the second groove section 2143b, and the third groove section 2143c are all located between the two second grooves 21451.

The predetermined pressure relief regions 21431 are one-to-one corresponding to the second weak portions 2145, which can reduce the number of second weak portions 2145, reduce the number of processing times for the pressure relief component 214, and reduce a stress of the pressure relief component 214. The first groove 2146 is arranged between the two second grooves 21451. During the pressure relief of the battery cell 20, the pressure relief component 214 is capable of cracking along the first groove section 2143a, the second groove section 2143b, and the third groove section 2143c, thereby opening the two predetermined pressure relief regions 21431, so that the two predetermined pressure relief regions 21431 are flipped open under the guidance of their corresponding second weak portions 2145. Therefore, the battery cell 20 has a larger pressure relief area, which is conducive to improving the pressure relief rate of the battery cell 20 and improving the reliability of the battery cell 20.

Referring to FIG. 3, FIG. 4, FIG. 5, FIG. 6, and FIG. 7, in some embodiments, the position where the second groove section 2143b is connected to the first groove section 2143a deviates from the two ends of the first groove section 2143a, and the position where the second groove section 2143b is connected to the third groove section 2143c deviates from the two ends of the third groove section 2143c.

The connection position of the second groove section 2143b and the first groove section 2143a deviates from the two ends of the first groove section 2143a, that is, the second groove section 2143b is connected between the two ends of the first groove section 2143a. Similarly, the connection position of the third groove section 2143c and the second groove section 2143b deviates from the two ends of the third groove section 2143c, that is, the second groove section 2143b is connected between the two ends of the third groove section 2143c, so that the shape of the first groove 2146 formed by the first groove section 2143a, the second groove section 2143b, and the third groove section 2143c is a structure approximately in an "H" shape.

By setting the connection position between the second groove section 2143b and the first groove section 2143a to be located between the two ends of the second groove section 2143b, and setting the connection position between the second groove section 2143b and the third groove section 2143c to be located between the two ends of the third groove section 2143c, so that the first groove section 2143a, the second groove section 2143b, and the third groove section 2143c form a structure similar to an "H" shape, both sides of the second groove section 2143b of the first groove 2146 are each capable of forming a predetermined pressure relief region 21431. Moreover, the two predetermined pressure relief regions 21431 are capable of being opened in a split manner for pressure relief during the pressure relief of the battery cell 20, which is conducive to further increasing the pressure relief effect of the battery cell 20 and can effectively improve the pressure relief rate of the battery cell 20.

In some embodiments, still referring to FIG. 5, the first groove section 2143a, the second groove section 2143b, and the third groove section 2143c all extend along a linear trajectory, and the first groove section 2143a and the third groove section 2143c are both perpendicular to the second groove section 2143b. That is, the extension direction of the second groove section 2143b is perpendicular to the extension direction of the first groove section 2143a and the extension direction of the third groove section 2143c, so that the shape of the first groove 2146 formed by the first groove section 2143a, the second groove section 2143b, and the third groove section 2143c is an "H"-shaped structure, and two predetermined pressure relief regions 21431 are formed on both sides of the second groove section 2143b. Of course, the two predetermined pressure relief regions 21431 may have the same area or different areas.

By setting the first groove section 2143a and the third groove section 2143c to be perpendicular to the second groove section 2143b, so that the extension direction of the second groove section 2143b is an arrangement direction of the first groove section 2143a and the third groove section 2143c, on the one hand, the regularity of the shape of the first groove 2146 can be improved, which is conducive to reducing the processing difficulty of the first groove 2146, so as to reduce the manufacturing cost of the battery cell 20. On the other hand, it is convenient for the two predetermined pressure relief regions 21431 on the pressure relief component 214 located on both sides of the second groove section 2143b to perform pressure relief in opposite directions during the pressure relief of the battery cell 20.

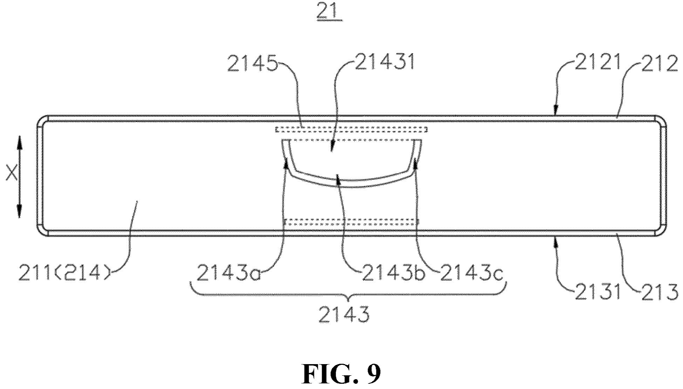

according to some embodiments of the present application, referring to FIG. 9, FIG. 9 is a bottom view of a shell 21 of a battery cell 20 according to further other embodiments of the present application. The first groove section 2143a, the second groove section 2143b, and the third groove section 2143c all extend in an arc trajectory.

For example, in FIG. 9, two ends of the second groove section 2143b are respectively connected to one end of the first groove section 2143a and one end of the third groove section 2143c, and the first groove section 2143a, the second groove section 2143b, and the third groove section 2143c all extend along an arc trajectory so that the first groove section 2143a, the second groove section 2143b, and the third groove section 2143c form a first groove 2146 similar to a "C"-shaped structure. At this point, the first connecting line closes an opening end of the C shape.

By setting the first groove section 2143a, the second groove section 2143b, and the third groove section 2143c to be structures extending in the arc trajectory, it is conducive to improving the arc degree of the connection position of the first groove section 2143a and the second groove section 2143b, and the arc degree of the connection position of the second groove section 2143b and the third groove section 2143c. On the one hand, it can reduce the difficulty of processing the first groove 2146, and on the other hand, it can facilitate the pressure relief component 214 to open the predetermined pressure relief region 21431 after cracking along the first groove section 2143a, the second groove section 2143b, and the third groove section 2143c to relieve the internal pressure of the battery cell 20.

Referring to FIG. 3, FIG. 4, FIG. 5, FIG. 6, and FIG. 7, in some embodiments, the pressure relief component 214 is provided with a second groove 21451, and the pressure relief component 214 forms the second weak portion 2145 in a region where the second groove 21451 is arranged. The first groove section 2143a, the second groove section 2143b, and the third groove section 2143c are all not in contact with the second groove 21451.

The first groove section 2143a, the second groove section 2143b, and the third groove section 2143c are all arranged at an interval from the second groove 21451, and the first groove section 2143a, the second groove section 2143b, and the third groove section 2143c are not in contact with the second groove 21451.

By arranging each of the first groove section 2143a, the second groove section 2143b, and the third groove section 2143c at an interval from the second groove 21451, on the one hand, a mutual influence between the first groove 2146 and the second groove 21451 during the processing is capable of being reduced, and on the other hand, the phenomenon that the pressure relief component 214 cracks along the second groove 21451 when the pressure relief component 214 cracks along the first groove 2146 for pressure relief is capable of being reduced, and a stress influence between the region of the pressure relief component 214 where the first groove 2146 is arranged and the region of the pressure relief component 214 where the second groove 21451 is arranged is capable of being reduced.

In some embodiments, the second groove section 2143b and the second groove 21451 are arranged opposite to each other in the first direction. In the first direction, the first groove section 2143a and the third groove section 2143c are arranged at an interval from the second groove 21451.

In the first direction, the second groove section 2143b and the second groove 21451 are arranged opposite to each other, and the first groove section 2143a and the third groove section 2143c are both arranged at an interval from the second groove 21451. There is a distance between the first groove section 2143a and the second groove 21451 in a direction of oppositely arranging the second groove section 2143b and the second groove 21451. There is a distance between the third groove section 2143c and the second groove 21451 in the direction of oppositely arranging the second groove section 2143b and the second groove 21451.

By making the second groove section 2143b and the second groove 21451 be arranged opposite to each other in the first direction, the first groove section 2143a and the third groove section 2143c are each arranged at an interval from the second groove 21451 in the first direction, so that the predetermined pressure relief region 21431 defined by the first groove section 2143a, the second groove section 2143b, and the third groove section 2143c, when opened, can be flipped around the region of the pressure relief component 214 where the second groove 21451 is arranged. Moreover, a flipping angle of the predetermined pressure relief region 21431 after being opened is capable of being increased, so as to increase the pressure relief area of the battery cell 20.

Referring to FIG. 3, FIG. 4, FIG. 5, FIG. 6, and FIG. 7, in some embodiments, the wall portion 211 is of a rectangular structure, and the first direction is parallel to a width direction of the wall portion 211.

The first surface 2111 of the wall portion 211 is rectangular, and the first direction is parallel to the width direction of the first surface 2111.

The second groove section 2143b and the second groove 21451 are arranged in the width direction of the wall portion 211, and in the width direction of the wall portion 211, the first groove section 2143a and the third groove section 2143c are both arranged at an interval from the second groove 21451. The space in the width direction of the wall portion 211 is large, which is convenient for processing the first groove 2146 and the second groove 21451. Moreover, during production, fracture initiation pressures of a plurality of battery cells 20 processed are relatively consistent.

Referring to FIG. 3, FIG. 4, FIG. 5, FIG. 6, and FIG. 7, in some embodiments, the pressure relief component 214 has the first surface 2111 and the second surface 2112 arranged opposite to each other in the thickness direction of the wall portion 211. The pressure relief component 214 is provided with a first groove 2146, and the first groove 2146 includes a plurality of steps of grooves arranged sequentially in a direction from the first surface 2111 to the second surface 2112. In two adjacent steps of grooves, the step of groove far from the first surface 2111 is arranged on a groove bottom surface of the step of groove close to the first surface 2111. A groove bottom wall of the step of groove farthest from the first surface 2111 among the plurality of steps of grooves is the first weak portion 2144.

The pressure relief component 214 is provided with the plurality of steps of grooves, the plurality of steps of grooves are sequentially arranged on the pressure relief component 214 in the direction from the first surface 2111 to the second surface 2112, and contours of the groove bottom surfaces of the various steps of scores decrease step by step. The cross section of the groove may be in various shapes, such as a rectangle or a circle. The groove on the pressure relief component 214 can be formed by various processing methods, such as stamping and cold heading.

The groove bottom wall of the step of groove farthest from the first surface 2111 among the plurality of steps of grooves is the first weak portion 2144, that is, the portion of the pressure relief component 214 located between the groove bottom surface of the first groove 2146 farthest from the first surface 2111 and the second surface 2112 is the first weak portion 2144.

For example, as shown in FIG. 6 and FIG. 7, the pressure relief component 214 is provided with three steps of grooves, namely, a first-step groove 2141, a second-step groove 2142 and a third-step groove 2143. During processing and forming, the first-step groove 2141 can be punched on the first surface 2111 first, the second-step groove 2142 can be punched on a bottom surface of the first-step groove 2141, and finally the third-step groove 2143 can be punched on a bottom surface of the second-step groove 2142. At this time, a groove bottom wall of the third-step groove 2143 is the first weak portion 2144, that is, the portion of the pressure relief component 214 located between the groove bottom surface of the third-step groove 2143 and the second surface 2112 is the first weak portion 2144.

The plurality of steps of grooves are sequentially arranged on the pressure relief component 214 in the direction from the first surface 2111 to the second surface 2112. During molding, the plurality of steps of grooves can be sequentially molded on the pressure relief component 214 first in the direction from the first surface 2111 to the second surface 2112.

The plurality of steps of grooves are sequentially arranged on the pressure relief component 214 in the direction from the first surface 2111 to the second surface 2112. During molding, the plurality of steps of grooves can be formed step by step, thereby reducing a molding force on the pressure relief component 214 and reducing a risk of cracks in the pressure relief component 214. The pressure relief component 214 is not prone to failure due to cracks at the positions where the grooves are set, thereby improving the reliability of the battery cell 20. The plurality of steps of grooves may be molded by stamping, cold heading, or the like, so that the groove wall of the groove will undergo cold work hardening (the grain arrangement changes, thus resulting in lattice distortion, reducing the metal plasticity, and increasing the material hardness), so that the groove has an enhanced ability to resist an external impact, and is less likely to be damaged by the external impact. This helps reduce the risk of leakage from the pressure relief component 214.

In some embodiments, in the thickness direction of the first wall, the maximum groove depth of the first groove 2146 is F, the thickness of the pressure relief component 214 is N, and 0.16≤F/N<1.

A maximum distance between a groove opening of the first groove 2146 and a groove bottom surface of the first groove in the thickness direction of the first wall 211 is the maximum groove depth of the first groove 2146.

A value of F/N may be any point value of or a range value of any two of 0.16, 0.18, 0.2, 0.22, 0.25, 0.28, 0.3, 0.32, 0.35, 0.38, 0.4, 0.42, 0.45, 0.48, 0.5, 0.62, 0.65, 0.68, 0.7, 0.72, 0.75, 0.78, 0.8, 0.82, 0.85, 0.88, 0.9, 0.92, 0.95, 0.98, 0.99, and the like.

It is understandable that, if the pressure relief component 214 and the first wall 211 are formed integrally, the first wall 211 may be used as the pressure relief component 214, and the thickness of the pressure relief component 215 is the thickness of the first wall 211.

In this embodiment, 0.16≤F/N<1, so that the maximum depth of the first groove 2146 will not account for a too small proportion of the thickness of the pressure relief component 214, and a blasting pressure of the battery cell 20 is not too high, which is conducive to improving the timeliness of the pressure relief of the battery cell 20.

In some embodiments, 0.4 mm≤F≤2 mm, and 0.8 mm≤N≤2.5 mm.

A value of F may be any point value of or a range value of any two of 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, and the like.

A value of N may be any point value of or a range value of any two of 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, 2.05 mm, 2.1 mm, 2.15 mm, 2.2 mm, 2.25 mm, 2.3 mm, 2.35 mm, 2.4 mm, 2.45 mm, 2.5 mm, and the like.

In this embodiment, 0.4 mm≤F≤2 mm, and 0.8 mm≤N≤2.5 mm, so that the maximum depth of the first groove 2146 and the thickness of the pressure relief component 214 are within a reasonable range, which has better economy. In the embodiment where the first wall 211 serves as the pressure relief component 214, the thickness of the first wall 211 is 0.8 mm to 2.5 mm. The thickness of the first wall 211 is greater than or equal to 0.8 mm, so that the first wall 211 has a sufficient strength. The thickness of the first wall 211 is less than or equal to 2 mm, so that the thickness of the first wall 211 is not too thick. When the volume of the shell 21 is constant, the internal space of the shell 21 can be increased to make more space for the electrode assembly 22. When the thickness of the first wall 211 is controlled within the range of 0.8 mm to 2.5 mm, the maximum depth of the first groove 2146 is controlled within the range of 0.4 mm to 2 mm, so that the maximum depth of the first groove 2146 is more matched with the thickness of the pressure relief component 214, and the pressure relief component 214 has a good pressure relief capability.

In some embodiments, the pressure relief component 214 is integrally formed with the wall portion 211.

Integral forming means that the wall portion 211 and the pressure relief component 214 are an integral structure when provided. For example, the pressure relief component 214 may be formed on the wall portion 211 by stamping, cold heading, or the like.

The pressure relief component 214 is integrally formed with the wall portion 211 without the need for an additional welding or bonding step, which helps reduce the risk of leakage from the pressure relief component 214. Moreover, during production, it is easy to keep fracture initiation pressures of a plurality of battery cells 20 processed relatively consistent.

In some embodiments, the material of the pressure relief component 214 includes aluminum alloy.

It is understandable that, in the embodiment where the pressure relief component 214 and the first wall portion 211 are integrally formed, the material of the first wall portion 211 includes aluminum alloy. If the first wall portion 211 is the end cover 216, the end cover 216 may be made of aluminum alloy; if the first wall portion 211 is the wall portion in the case 215, the case 215 may be made of aluminum alloy.

Aluminum alloy has the characteristics of light weight and good ductility, and it is easier to process the first groove 2146 and the second groove 21451 on the pressure relief component 214. In the embodiment where the pressure relief component 214 and the first wall portion 211 are integrally formed, the first wall portion 211 is made of aluminum alloy, which is capable of effectively reducing the difficulty of forming the first wall portion 211.

In some embodiments, the aluminum alloy includes components at percentage mass contents of: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%.

This aluminum alloy belongs to 3xxx-series aluminum alloy, and has a lower hardness and better forming ability, which reduces the difficulty of processing the first groove 2146 and the second groove 21451, is conducive to improving the processing accuracy of the first groove 2146 and the second groove 21451, and improves the pressure relief consistency of the pressure relief component 214.

In some embodiments, the aluminum alloy includes components at percentage mass contents of: aluminum≥96.7%, 0.05%≤copper≤0.2%, iron≤0.7%, manganese≤1.5%, silicon≤0.6%, zinc≤0.1%, components of other individual elements≤0.05%, and total components of other elements≤0.15%.

This aluminum alloy belongs to 5xxx-series aluminum alloy, and the pressure relief component 214 made of this aluminum alloy has higher hardness, higher strength, and good damage resistance.

In other embodiments, the pressure relief component 214 and the wall portion 211 are separably arranged, the wall portion 211 is provided with a pressure relief hole, and the pressure relief component 214 is arranged on the wall portion 211 and covers the pressure relief hole.

"The pressure relief component 214 and the wall portion 211 are separably arranged, the wall portion 211 is provided with a pressure relief hole, and the pressure relief component 214 is arranged on the wall portion 211 and covers the pressure relief hole" means that during manufacturing, the pressure relief hole is opened on the wall portion 211, and the pressure relief component 214 and the wall portion 211 are provided separately and finally connected together. For example, the pressure relief component 214 may be welded to the wall portion 211. The pressure relief component 214 is a rupture disc mounted on the wall portion 211.

The pressure relief component 214 is arranged separately from the wall portion 211 and is mounted on the wall portion 211, so as to facilitate processing and manufacturing.

Referring to FIG. 3, FIG. 4, FIG. 5, FIG. 6, and FIG. 7, in some embodiments, the battery cell 20 includes an electrode assembly 22, and the electrode assembly 22 is accommodated in a shell 21. The wall portion 211 supports the electrode assembly 22 in the direction of gravity.

The wall portion 211 is a wall of the shell 21 that supports the electrode assembly 22 in the direction of gravity. It is understandable that the wall portion 211 may be a bottom wall of the case 215. The wall portion 211 may also be the end cover 216. When the wall portion 211 is the end cover 216, the battery cell 20 is used upside down.

The wall portion 211 supports the electrode assembly 22 in the direction of gravity, and the pressure relief component 214 is arranged on the wall portion 211. In this way, during the pressure relief of the battery cell 20, an ejected fluid medium is not easy to act on other electrical connection components, thereby reducing the risk of short circuit during the pressure relief of the battery cell 20.

Referring to FIG. 3, FIG. 4, FIG. 5, FIG. 6, and FIG. 7, in some embodiments, the battery cell 20 includes an electrode terminal 23, and the electrode terminal 23 is arranged on another wall of the shell 21 except the wall portion 211.

The electrode terminal 23 and the pressure relief component 214 are arranged on different walls of the shell 21. For example, when the wall portion 211 is the bottom wall of the case 215, the electrode terminal 23 may be arranged on the side wall of the case 215 or on the end cover 216. For another example, when the wall portion 211 is a side wall of the case 215, the electrode terminal 23 may be arranged on another side wall or the bottom wall of the case 215 or on the end cover 216. When the wall portion 211 is the end cover 216, the electrode terminal 23 may be arranged on the side wall or bottom wall of the case 215.

The electrode terminal 23 and the pressure relief component 214 are respectively arranged on different walls of the shell 21. During the pressure relief of the battery cell 20, the ejected fluid medium is not easy to act on the electrode terminal 23 and cause the electrode terminal 23 to short-circuit, thereby reducing the risk of short circuit during the pressure relief of the battery cell 20.

Optionally, the electrode terminal 23 is arranged on a wall of the shell 21 opposite to the wall portion 211.

When the wall portion 211 is the bottom wall of the case 215, the electrode terminal 23 may be arranged on the end cover 216. When the wall portion 211 is a side wall of the case 215, the electrode terminal 23 may be arranged on another side wall of the case 215 opposite to the wall portion 211. When the wall portion 211 is the end cover 216, the electrode terminal 23 may be arranged on the bottom wall of the case 215.

The electrode terminal 23 is arranged on the wall of the shell 21 opposite to the wall portion 211, and the electrode terminal 23 is far away from the pressure relief component 214; therefore, during the pressure relief of the battery cell 20, the ejected fluid medium is even not easy to act on the electrode terminal 23 to cause short-circuit of the electrode terminal 23, thereby reducing the risk of short circuit during the pressure relief of the battery cell 20.

Referring to FIG. 3, FIG. 4, FIG. 5, FIG. 6, and FIG. 7, in some embodiments, the shell 21 includes a case 215 and an end cover 216, the case 215 has an opening 2151, and the end cover 216 is connected to the case 215 and closes the opening 2151. The end cover 216 is the wall portion 211, or the case 215 includes the wall portion 211.

The case 215 includes side walls and a bottom wall that are integrally formed, that is, the case 215 is manufactured by an integral molding process, for example, an integral molding process such as stamping, casting, or extrusion molding. In other words, the side walls and the bottom wall of the case 215 are of an integral structure.

The case 215 includes a wall portion 211, that is, the wall portion 211 is a wall of the case 215. For example, in FIG. 5 and FIG. 6, the wall portion 211 is the bottom wall of the case 215 arranged opposite to the end cover 216 in the thickness direction of the wall portion 211. Of course, in another embodiment, the wall portion 211 may also be a side wall of the case 215.

It should be noted that the structure of the battery cell 20 is not limited thereto. In some embodiments, the battery cell 20 may be of other structures. For example, the shell 21 may include a case 215 and an end cover 216. The case 215 is provided with an accommodating cavity having an opening 2151, and the accommodating cavity is used to accommodate an electrode assembly 22. The end cover 216 closes the opening 2151, and the end cover 216 is the wall portion 211.

It should be noted that the structure of the battery cell 20 can be diversified. In some embodiments, the shell 21 may include a case 215 and two end covers 216. The case 215 is provided with an accommodating cavity, and the accommodating cavity is used to accommodate the electrode assembly 22. The case 215 has openings 2151 formed at both ends of the wall portion 211 in the thickness direction, and the two openings 2151 are both in communication with the accommodating cavity. The two end covers 216 respectively close the two openings 2151, and one end cover 216 of the two end covers 216 is the wall portion 211.

The case 215 of the shell 21 is provided with the openings 2151 at both ends in the thickness direction of the wall portion 211, and the two end covers 216 respectively close the two openings 2151. The wall portion 211 is one end cover 216 of the two end covers 216. The battery cell 20 adopting this structure is convenient for assembling the battery cell 20 from both ends of the case 215, which is conducive to reducing the manufacturing difficulty and assembling difficulty of the battery cell 20.

When the end cover 216 is the wall portion 211, the pressure relief component 214 is arranged on the end cover 216, which is simple and convenient to manufacture. When the case 215 includes the wall portion 211, the pressure relief component 214 is arranged on a wall of the case 215, and the fluid medium sprayed from the pressure relief component 214 is not easy to act on another electrical connection structure on the end cover 216, which is conducive to reducing the risk of short circuit of the battery cell 20.

An embodiment of the present application further provides a battery 100. The battery 100 includes the above-mentioned battery cell 20.

An embodiment of the present application further provides an electrical device. The electrical device includes the above-mentioned battery cell 20.

According to some embodiments of the present application, reference is made to FIG. 3 to FIG. 7.

The embodiments of the present application provide a battery cell 20. The battery cell 20 includes a shell 21 and a pressure relief component 214. The shell 21 has a wall portion 211, and the pressure relief component 214 is arranged on the wall portion 211. The pressure relief component 214 includes a first weak portion 2144 and a second weak portion 2145, the first weak portion 2144 defines a predetermined pressure relief region 21431, the pressure relief component 214 is configured to be capable of cracking along at least a part of the first weak portion 2144 during pressure relief of the battery cell 20, and the second weak portion 2145 is configured to guide at least a part of the predetermined pressure relief region 21431 to flip over to open at least a part of the predetermined pressure relief region 21431. The first weak portion 2144 includes a first weak section 21441, and the first weak section 21441 and the second weak portion 2145 are arranged at an interval in a first direction. In the first direction, a minimum distance between the first weak section 21441 and the second weak portion 2145 is L, and a cross-sectional area of the second weak portion 2145 perpendicular to its extension direction is S, meeting: 3.3 mm≤L≤48 mm, and 0.008 mm²≤S≤0.45 mm².

The pressure relief component 214 is provided with the first weak portion 2144, so that the pressure relief component 214 is capable of cracking along at least a part of the first weak portion 2144 during the pressure relief of the battery cell 20, so as to achieve relief of an internal pressure of the battery cell 20. The pressure relief component 214 is further provided with the second weak portion 2145. The first weak portion 2144 defines the predetermined pressure relief region 21431. The second weak portion 2145 is capable of guiding at least a part of the predetermined pressure relief region 21431 to flip over, so as to open at least a part of the predetermined pressure relief region 21431 for pressure relief. The second weak portion 2145 plays an auxiliary role in the predetermined pressure relief region 21431, so that it is easier for the predetermined pressure relief region 21431 to flip over, which is conducive to increasing an opening area of the predetermined pressure relief region 21431. Since the predetermined pressure relief region 21431 needs to be flipped open under the guidance of the second weak portion 2145, the minimum distance between the first weak section 21441 and the second weak portion 2145 can be regarded as a power arm for the predetermined pressure relief region 21431 to flip open. The larger the minimum distance between the first weak section 21441 and the second weak portion 2145 is, the larger the power arm for the predetermined pressure relief region 21431 to flip open is, and the smaller a force required to push the predetermined pressure relief region 21431 to flip open can be. That is, the larger L is, the easier it is for the predetermined pressure relief region 21431 to flip open, and the smaller L is, the more difficult it is for the predetermined pressure relief region 21431 to flip open. In addition, it should be noted that the magnitude of L may affect the speed at which the predetermined pressure relief region 21431 flips open during the pressure relief of the battery cell 20. The larger L is, the faster the speed at which the predetermined pressure relief region 21431 flips open during the pressure relief of the battery cell 20. The smaller L is, the slower the speed at which the predetermined pressure relief region 21431 flips open during the pressure relief of the battery cell 20. When L≥3.3 mm, the power arm for flipping open the predetermined pressure relief region 21431 is large, which facilitates the rapid flipping open of the predetermined pressure relief region 21431, and is conducive to improving the timeliness of the pressure relief of the battery cell 20. When L≤48 mm, the power arm for flipping open the predetermined pressure relief region 21431 will not be too large, so that the first weak section 21441 does not easily crack due to a change in an air pressure inside the battery cell 20, which is conducive to improving the reliability of the battery cell 20. Therefore, when 3.3 mm≤L≤48 mm, the first weak section 21441 does not easily crack due to the change in the air pressure inside the battery cell 20, and it is also convenient for the predetermined pressure relief region 21431 to be quickly flipped open, which is conducive to improving the timeliness of the pressure relief of the battery cell 20. When S≥0.008 mm², the cross-sectional area of the second weak portion 2145 perpendicular to its extension direction is large, so that the second weak portion 2145 does not easily crack due to the change in the air pressure inside the battery cell 20, which is conducive to improving the reliability of the battery cell 20. When S≤0.45 mm², the cross-sectional area of the second weak portion 2145 perpendicular to its extension direction is not too large, which is conducive to reducing a resistance to flipping over of the predetermined pressure relief region 21431, facilitates the rapid flipping open of the predetermined pressure relief region 21431, and is conducive to improving the timeliness of the pressure relief of the battery cell 20. Therefore, when 0.008 mm²≤S≤0.45 mm², the second weak portion 2145 does not easily crack due to the change in the air pressure inside the battery cell 20, and it is also convenient for the predetermined pressure relief region 21431 to be quickly flipped open, which is conducive to improving the timeliness of the pressure relief of the battery cell 20.

In the first direction, the dimension of the shell 21 is C. When 20 mm≤C≤40 mm, 3.3 mm≤L≤18 mm is met. When 40 mm≤C≤60 mm, 6.6 mm≤L≤28 mm is met. when 60 mm≤C≤100 mm, 10 mm≤L≤48 mm is met. For a battery cell 20 with a size of 20 mm≤C≤40 mm, when 3.3 mm≤L≤18 mm, the minimum distance between the first weak section 21441 and the second weak portion 2145 in the first direction is moderate, which is conducive to further reducing the risk of the predetermined pressure relief region 21431 being affected by the change of the internal pressure of the battery cell 20 and causing the pressure relief component 214 to prematurely crack along the first weak portion 2144, and helps the pressure relief component 214 crack along the first weak portion 2144 more promptly when thermal runaway occurs in the battery cell 20, thereby improving the timeliness of the pressure relief of the battery cell 20 and thus improving the reliability of the battery cell 20. For a battery cell 20 with a size of 40 mm<C≤60 mm, when 6.6 mm<L≤28 mm, it is conducive to further reducing the risk of the predetermined pressure relief region 21431 being affected by the change of the internal pressure of the battery cell 20 and causing the pressure relief component 214 to prematurely crack along the first weak portion 2144, and helps the pressure relief component 214 crack along the first weak portion 2144 more promptly when thermal runaway occurs in the battery cell 20, thereby improving the timeliness of the pressure relief of the battery cell 20 and thus improving the reliability of the battery cell 20. For a battery cell 20 with a size of 60 mm<C≤100 mm, when 10 mm<L≤48 mm, it is conducive to further reducing the risk of the predetermined pressure relief region 21431 being affected by the change of the internal pressure of the battery cell 20 and causing the pressure relief component 214 to prematurely crack along the first weak portion 2144, and helps the pressure relief component 214 crack along the first weak portion 2144 more promptly when thermal runaway occurs in the battery cell 20, thereby improving the timeliness of the pressure relief of the battery cell 20 and thus improving the reliability of the battery cell 20.

Optionally, 0.03mm²≤S≤0.15mm². When S≥0.03mm², a risk of the second weak portion 2145 cracking due to the change in the gas pressure inside the battery cell 20 can be further reduced, which is conducive to improving the reliability of the battery cell 20. When S≤0.15mm², a resistance to flipping over of the predetermined pressure relief region 21431 is smaller, which facilitates the rapid flipping open of the predetermined pressure relief region 21431, and is conducive to improving the timeliness of the pressure relief of the battery cell 20. Therefore, when 0.03mm²≤S≤0.15mm², the second weak portion 2145 does not easily crack due to the change in the air pressure inside the battery cell 20, and it is also convenient for the predetermined pressure relief region 21431 to be quickly flipped open, which is conducive to improving the timeliness of the pressure relief of the battery cell 20.

The above descriptions are merely preferred embodiments of the present application, and are not intended to limit the present application. For persons skilled in the art, the present application may have various modifications and variations. Any modification, equivalent replacement, improvement, and the like made within the spirit and principle of the present application shall fall within the scope of protection of the present application.

## Claims

1. A battery cell, comprising:
a shell, having a wall portion;
a pressure relief component arranged on the wall portion, wherein the pressure relief component comprises a first weak portion and a second weak portion, the first weak portion defines a predetermined pressure relief region, the pressure relief component is configured to be capable of cracking along at least a part of the first weak portion during pressure relief of the battery cell, and the second weak portion is configured to guide at least a part of the predetermined pressure relief region to flip over to open the at least a part of the predetermined pressure relief region; and
the first weak portion comprises a first weak section, the first weak section and the second weak portion are arranged at an interval in a first direction, and in the first direction, a minimum distance between the first weak section and the second weak portion is L, and a cross-sectional area of the second weak portion perpendicular to its extension direction is S, meeting: 3.3 mm≤L≤48 mm, 0.008 mm²≤S≤0.45 mm².

2. The battery cell according to claim 1, wherein in the first direction, the dimension of the shell is C;
when 20 mm≤C≤40 mm, 3.3 mm≤L≤18 mm is met;
when 40 mm<C≤60 mm, 6.6 mm≤L≤28 mm is met; and
when 60 mm≤C≤100 mm, 10 mm≤L≤48 mm is met.

3. The battery cell according to claim 1 or 2, wherein 0.03 mm²≤S≤0.15 mm².

4. The battery cell according to any one of claims 1 to 3, wherein the pressure relief component is provided with a first groove, and the pressure relief component forms the first weak portion in a region where the first groove is arranged.

5. The battery cell according to any one of claims 1 to 4, wherein the pressure relief component is provided with a second groove, and the pressure relief component forms the second weak portion in a region where the second groove is arranged, a minimum width of a groove bottom surface of the second groove is D, and a minimum thickness of the second weak portion is H, meeting: S=D×H.

6. The battery cell according to claim 5, wherein 0.04 mm≤D≤0.3 mm, and optionally, 0.06 mm≤D≤0.15 mm.

7. The battery cell according to claim 5 or 6, wherein 0.2 mm≤H≤1.5 mm, and optionally, 0.5 mm≤H≤1 mm.

8. The battery cell according to any one of claims 5 to 7, wherein the second groove is arranged on a surface of the pressure relief component facing an interior of the shell.

9. The battery cell according to any one of claims 1 to 8, wherein the pressure relief component has a first surface and a second surface arranged opposite to each other in a thickness direction of the wall portion, the first surface is provided with the first groove, the pressure relief component forms the first weak portion in the region where the first groove is arranged, the second surface is provided with the second groove, and the pressure relief component forms the second weak portion in the region where the second groove is arranged.

10. The battery cell according to claim 9, wherein the first surface is a surface of the pressure relief component facing away from the interior of the shell, and the second surface is the surface of the pressure relief component facing the interior of the shell.

11. The battery cell according to any one of claims 1 to 10, wherein the pressure relief component is provided with the first groove, and the pressure relief component forms the first weak portion in the region where the first groove is arranged;
the first groove comprises a first groove section, a second groove section, and a third groove section, the first groove section and the third groove section are arranged opposite to each other, the second groove section connects the first groove section and the third groove section, in the first direction, the second groove section and the second weak portion are arranged at an interval, and the pressure relief component forms the first weak section in a region where the second groove section is arranged.

12. The battery cell according to claim 11, wherein the first weak portion defines two predetermined pressure relief regions, the two predetermined pressure relief regions are respectively located on both sides of the second groove section, and at least one second weak portion is correspondingly arranged in each of the predetermined pressure relief regions.

13. The battery cell according to claim 12, wherein one second weak portion is correspondingly arranged in each of the predetermined pressure relief regions, the pressure relief component is provided with the second groove, the pressure relief component forms the second weak portion in the region where the second groove is arranged, and the first groove is located between the two second grooves.

14. The battery cell according to any one of claims 11 to 13, wherein the position where the second groove section is connected to the first groove section deviates from both ends of the first groove section, and the position where the second groove section is connected to the third groove section deviates from both ends of the third groove section.

15. The battery cell according to any one of claims 11 to 14, wherein the pressure relief component is provided with the second groove, the pressure relief component forms the second weak portion in the region where the second groove is arranged, and the first groove section, the second groove section, and the third groove section are not in contact with the second groove.

16. The battery cell according to claim 15, wherein the second groove section and the second groove are arranged opposite to each other in the first direction, and in the first direction, the first groove section and the third groove section are each arranged at an interval from the second groove.

17. The battery cell according to claim 16, wherein the wall portion is of a rectangular structure, and the first direction is parallel to a width direction of the wall portion.

18. The battery cell according to any one of claims 1 to 17, wherein the pressure relief component has the first surface and the second surface arranged opposite to each other in the thickness direction of the wall portion, the pressure relief component is provided with the first groove, and the first groove comprises a plurality of steps of grooves arranged sequentially in a direction from the first surface to the second surface, and in two adjacent steps of grooves, the step of groove far from the first surface is arranged on a groove bottom surface of the step of groove close to the first surface; and
a groove bottom wall of the step of groove farthest from the first surface among the plurality of steps of grooves is the first weak portion.

19. The battery cell according to any one of claims 1 to 18, wherein the pressure relief component is integrally formed with the wall portion.

20. The battery cell according to any one of claims 1 to 18, wherein the pressure relief component and the wall portion are arranged separately, the wall portion is provided with a pressure relief hole, and the pressure relief component is mounted on the wall portion and covers the pressure relief hole.

21. The battery cell according to any one of claims 1 to 20, wherein the battery cell comprises an electrode assembly, the electrode assembly is accommodated in the shell, and the wall portion supports the electrode assembly in the direction of gravity.

22. The battery cell according to any one of claims 1 to 21, wherein the battery cell comprises an electrode terminal, and the electrode terminal is arranged on another wall of the shell except the wall portion.

23. The battery cell according to claim 22, wherein the electrode terminal is arranged on a wall of the shell opposite to the wall portion.

24. The battery cell according to any one of claims 1 to 23, wherein the shell comprises:
a case, having an opening; and
an end cover, connected to the case and closing the opening;
wherein the end cover is the wall portion, or the case comprises the wall portion.

25. The battery cell according to claim 24, wherein the case has two openings, and the end covers one-to-one correspond to the openings.

26. A battery, comprising the battery cell according to any one of claims 1 to 25.

27. An electrical device, comprising the battery cell according to any one of claims 1 to 25.
